(19) Europäisches Patentamt
European Patent Office
Office européen des brevets

(11) EP 3 226 191 A1

(12) # EUROPÄISCHE PATENTANMELDUNG

(43) Veröffentlichungstag:
**04.10.2017 Patentblatt 2017/40**

(51) Int Cl.:
***G06Q 20/36*** *(2012.01)* ***G06Q 20/06*** *(2012.01)*
***G06Q 20/38*** *(2012.01)*

(21) Anmeldenummer: **17164664.9**

(22) Anmeldetag: **03.04.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **03.04.2016 DE 102016106055**

(71) Anmelder:
- **Trinkaus, Hans**
  **67661 Kaiserslautern (DE)**
- **Fassbender, Achim**
  **67677 Enkenbach-Alsenborn (DE)**

(72) Erfinder: **FASSBENDER, Achim**
**67677 Enkenbach-Alsenborn (DE)**

(74) Vertreter: **Leonhard, Frank Reimund**
**Leonhard & Partner**
**Patentanwälte**
**Postfach 10 09 62**
**80083 München (DE)**

(54) ## ALTERNATIVES ZAHLUNGSMITTEL, STARK PERSONIFIZIERT, SCHWACH PERSONIFIZIERT ODER OHNE PERSONIFIZIERUNG

(57) Das Problem der vorgeschlagenen Erfindung besteht darin, alternative Zahlungsmittel verkehrsfähig zu machen. Erreicht wird das mit einem Zahlungsmittel für einen Bezahlvorgang oder zum Ersatz einer buchbaren Währung oder eines physischen Bargelds. Eine Zuordnung eines Geldbetrags zu einer oder keiner oder einer fiktiven Person wird durch eine Textdatei kleiner 1 kB (Wertträger) verwirklicht, oder durch eine Anzahl von Kopien dieser. Der Wertträger enthält einen Identifier, anhand dessen der Wertträger unter allen anderen in Umlauf befindlichen Wertträgern eindeutig identifizierbar ist. Auf einem zentralen Webserver ist oder wird - als ein Wiedererkennungsschlüssel - ein Hash-Wert einer Hash-Funktion jedes der Wertträgers geführt, gespeichert ist und/oder abrufbar. Der Wertträger als Zahlungsmittels hat vier Nutzungsvorgänge, möglich für alle Wertträger. Ein Überprüfen ... jeder Wertträger ist auf seine Gültigkeit überprüfbar. Ein Zusammenfügen ... mindestens zwei gültige Wertträger, die derselben Person zugeordnet sind, können in einen einzigen Wertträger zusammengeführt werden, wobei ein neuer gültiger Wertträger über die Summe entsteht, dagegen die alten Wertträger ungültig werden. Ein Aufteilen ... ein gültiger Wertträger wird zu Anteilen aufgeteilt, wobei für jeden Anteil der Aufteilung ein neuer gültige Wertträger entsteht, dagegen der alte Wertträger ungültig wird. Bei personifizierten Wertträgern auch ein Übertragen: Ein gültiger Wertträger, der einer Person einen Geldbetrag zuordnet, wird einer anderen Person übertragen, so dass der Geldbetrag nicht mehr der einen sondern der anderen Person zugeordnet ist, wobei ein neuer Wertträger über denselben Geldbetrag entsteht, dagegen der alte Wertträger ungültig wird.

FIG. 1

```
 &lt;?xml version ="1.0“ encoding ="UTF-8“?&gt;
-&lt;MoneyItem&gt;
     &lt;Amount&gt;129,59 €&lt;/Amount&gt;
     &lt;Owner&gt;klarabella@credits.com&lt;/Owner&gt;
     &lt;Appendix&gt;vHYkzVIiqbLknvtihJDCbx1pCaDDryI/27bB1hDaJxkq27O&lt;/Appendix&gt;
     &lt;Identifier&gt;nkRV3xQcQnTeyW+1PsoRAIISx+1kubCLdwLuav0fcBjVTJjL&lt;/Identifier&gt;
 &lt;/MoneyItem&gt;
```

EP 3 226 191 A1

Printed by Jouve, 75001 PARIS (FR)

## Beschreibung

Die Erfindung betrifft Zahlungsmittel, die keine Geldscheine oder Münzen sind. Sie sind auf der Basis von lesbaren Daten aufgebaut, gleichwohl "sicher" oder gesichert gegen Fälschung. Auf Anspruch 1 und auf Anspruch 6 wird Bezug genommen.

Solche alternative Zahlungsmittel sind als BiCoins geläufig und in der Tat gebräuchlich, indes verrufen, weil sie über dunkle Kanäle laufen und von zwielichtigen oder schattenhaften oder ganz schwarzen Personen benutzt werden, meist von Namen und Personen losgelösten globalen Netz, das dunkle Geschäfte anzieht. Das verstellt indes den Blick für die Sonnenseiten dieses Netz-Zahlungsmittels, welches auch von Stiftungen, NGOs oder andern Lichtgestalten dieser Erde als Zuwendungen benötigt wird, in welchen Fällen die Spender nicht auffallen oder identifiziert werden wollen.

**Das Problem der Erfindung** besteht darin, diese alternativen Zahlungsmittel verkehrsfähig zu machen.

Erreicht wird das mit Anspruch 1 oder 6 oder 12 oder 13.

MoneyItems (folgend so genannte MIT-Objekte sind ein auf menschenlesbaren Dateien basierendes Zahlungsmittel neben Bar- und Giralgeld. Ein MIT-Objekt ordnet einer Person einen Geldbetrag zu. Ein zentraler Server ermöglicht Nutzungsvorgänge auf jedem der MIT-Objekte und verwaltet deren Gültigkeit.

Das Zahlungsmittel ist für einen Bezahlvorgang oder zum Ersatz einer buchbaren Währung oder eines physischen Bargelds. Eine Zuordnung eines Geldbetrags zu einer Person erfolgt durch eine Textdatei kleiner 1 kB (im Folgenden "Wertträger" genannt) oder durch eine Anzahl von Kopien. Der Wertträger enthält einen Identifier, anhand dessen der Wertträger unter allen anderen in Umlauf befindlichen Wertträgern eindeutig identifizierbar ist. Auf einem zentralen Webserver wird ein Hash-Wert einer Hash-Funktion jedes der Wertträgers geführt. Der Hash-Wert funktioniert als ein Wiedererkennungsschlüssel.

Das Führen kann ein Speichern oder eine Abrufbarkeit sein.

Das Verfahren zum Bezahlen mit einem personalisierten Wertträger, arbeitet mit den Schritten ... Aufrufen des Wertträgers auf einem System, zB. einem Computer Tablet oder Mobilgerät, wobei die Eingaben zur Identifizierung des Wertträgerinhabers überprüft und bestätigt oder abgelehnt werden. Nach einer erfolgreichen Identifizierung erfolgt die Eingabe eines Betrags, der unterhalb des aktuellen Wertes des Wertträgers liegen sollte. Der Wertträger wird dann in wenigstens einen ersten und einen zweiten Wertträger aufgeteilt und der ursprüngliche Wertträger "vernichtet" (symbolisch). Der erste Wertträger erhält einen Wert, der dem eingegebenen Betrag entspricht. Der zweite Wertträger erhält einen Wert, der dem Wert des ursprünglichen Wertträgers abzüglich des Werts des ersten Wertträgers entspricht.

Der erste Wertträger kann über ein Ausgabegerät ausgegeben werden und an den Empfänger des Betrags übermittelt werden. Das Übermitteln des ersten Wertträgers kann auf alle heute denkbare Arten, insbesondere digitalen Arten geschehen.

MIT-Objekte sind eine neue "Darreichungsform" von Geld neben Bar- und Giralgeld. Bei einem MIT-Objekt handelt es sich um eine (z.B. menschenlesbare) Datei, die im Wesentlichen einen Nutzernamen sowie die Angabe eines Geldbetrags enthält. Einem Nutzer ist auf diese Weise ein Geldbetrag zugeordnet. Auf einem zentralen Server ist zu jedem gültigen MIT-Objekt ein Fingerabdruck (sog. Hash-Digest) gespeichert, um einerseits Fälschungen auszuschließen und andererseits den Einblick der Bank in die finanzielle Situation ihrer Nutzer zu begrenzen.

Ein Unterschied zum Bargeld ist die Personalisiertheit: MIT-Objekte lassen sich als personalisierte Geldscheine auffassen. Beim Bezahlen mit MIT-Objekten wird der Nutzername des Senders gegen den Nutzernamen des Empfängers ausgetauscht. Dieser Vorgang wird vom zentralen Server ausgeführt und erfordert die Authentifizierung des Senders.

Ein weiterer Unterschied zum Bargeld ist das Fehlen der Stückelung: Ein MIT-Objekt kann werterhaltend in mehrere MIT-Objekte zerlegt werden. Dieser Vorgang wird vom zentralen Server ausgeführt und erfordert die Authentifizierung des Nutzers. Umgekehrt können mehrere MIT-Objekte desselben Nutzers werterhaltend zu einem einzigen MIT-Objekt zusammengeführt werden. Dieser Vorgang wird vom zentralen Server ausgeführt und erfordert die Authentifizierung des Nutzers.

Ein Unterschied zum Giralgeld ist der fehlende Einblick der Bank: Auf dem zentralen Server ist zu jedem gültigen MIT-Objekt nur der Fingerabdruck gespeichert. Es ist praktisch nicht möglich, anhand des Hash-Wertes die Zuordnung von Nutzername und Hashwert zu rekonstruieren. Ein MIT-Objekt wird durch einen der o.g. Nutzungsvorgänge (Bezahlen, Aufteilen, Zusammenführen) ungültig und kann folglich nur einmalig verwendet werden, Anspruch 9. Die funktionalen Fähigkeiten der MIT-Objekte können auch beschränkt werden auf einige der vier möglichen Funktionen, und ebenso auf alle Permutationen von Zusammenfügen (1), Aufteilen (2), Übertragen (3) und Überprüfen (4), wie auch individuell jede Funktion einzeln, als Zweiergruppe oder als Dreiergruppe.

Möchte der Fachmann die Bindung an eine Person weitgehend aufgeben (schwach personalisieren), kann eine einzige Person ausgewählt sein, der alle MIT Objekte zugeordnet sind, Anspruch 11. Die Person ist dabei für alle Wertträger dieselbe, um eine weitest gehende Unabhängigkeit von einer Personalisierung zu erhalten, oder den Wertträger ohne Bindung an einen Eigentümer oder eine Person zu gestalten, insbesondere die für alle Wertträger selbe Person eine fiktive Person ist. Als fiktive Person kann der Fachmann des Art. 56 EPC zugeordnet werden oder ein Herr Freiherr von Reibach oder eine verstorbene Person, wie Ludwig der XIVte (der Sonnenkönig).

Möchte der Fachmann die Bindung an eine oder jede Person ganz aufgeben (ohne Personalisieren) sind alle MIT Objekte ohne eine Einrichtung, die eine Zuordnung erlaubt, vgl. Anspruch 12 oder 13. Nur der Geldbetrag wird der Textdatei zugeordnet.

Das Zahlungsmittel ist dann für einen Bezahlvorgang oder zum Ersatz einer buchbaren Währung oder eines physischen Bargelds, wobei keine Zuordnung eines Geldbetrags zu einer Person, sondern eine Zuordnung des Geldbetrags zu einer Textdatei kleiner 1 kB (im Folgenden: Wertträger) erfolgt. Der Wertträger hat einen Identifier, anhand dessen der Wertträger und damit der Geldbetrag eindeutig identifizierbar ist, Anspruch 12.

Auf einem zentralen Webserver ist als ein Wiedererkennungs-Schlüssel ein Hash-Wert einer Hash-Funktion jedes der Wertträgers geführt, gespeichert und/oder abrufbar. Alternativ dazu ist jedem der Wertträger ein Hash-Wert einer Hash-Funktion als ein individueller Wiedererkennungsschlüssel zugeordnet, um mit auf einem zentralen Webserver gespeicherten und/oder davon abrufbaren Hash-Werten vergleichbar zu sein.

So ist jeder der Wertträger auffindbar oder identifizierbar.

Das Zahlungsmittel ist für eine oder statt einer Währung vorgesehen, Anspruch 13, wobei keine Zuordnung eines Geldbetrags zu einer Person erfolgt, stattdessen ein Geldbetrag durch eine insbesondere menschenlesbare Textdatei (Wertträger) kleiner 300 Bytes identifizierbar ist. Die Textdatei enthält einen Wiedererkennungsschlüssel (Identifier), anhand dessen ein bestimmter Wertträger unter allen in Umlauf befindlichen Wertträgern eindeutig identifizierbar ist.

Ein zentraler Webserver führt einen Wiedererkennungs-Schlüssel eines Hash-Werts einer kryptographisch sicheren Hash-Funktion des Wertträgers. Alternativ umschrieben hat jeder der Wertträger als Wiedererkennungs-Schlüssel einen Hash-Wert einer kryptographisch sicheren Hash-Funktion hat oder führt, um diesen Wertträger über einen auf einem zentralen Webserver gespeicherten Wiedererkennungs-Schlüssel vergleichen zu können oder eindeutig identifizieren zu können oder auffinden zu können.

**Beispiele** ergänzen und erläutern die beanspruchte Erfindung ...

Figur 1 ein MIT-Objekt, dargestellt in einem XML-Editor mit Syntax-Highlighting.

Figur 2 verdeutlicht die Zweistufigkeit der Zuordnung. Der Server (Zylinder 10) verwaltet die Gültigkeit des MIT-Objekts (Sprechblase), welches einer Person einen Geldbetrag zuordnet.

Figur 3.1 Nutzungsvorgang "Zusammenführen" als Flussdiagramm. Hier ohne Authentifikation.

Figur 3.2 Der Nutzungsvorgang "Zusammenführen" in einer GUI. Ansicht der GUI eines Anwendungs-Programms (oder einer Funktion oder App) das/die auf den REST-Service zugreift. MIT-Objekt A und MIT-Objekt B werden erst nach erfolgreich abgeschlossener Transaktion ungültig.

Figur 3.3 Der Nutzungsvorgang "Zusammenführen" als Prozessdiagramm. Der Client 30 erfragt vom Server 20 zunächst ein freies Paar aus Identifier und Appendix. Aus diesen Daten erzeugt er lokal das neue MIT-Objekt Z. Der Server 20 berechnet ebenfalls die Summe und speichert zu Identifier Z Fingerabdruck und Siegel.

Figur 4.1 Der Nutzungsvorgang "Aufteilen" als Flussdiagramm. Hier ohne Authentifikation.

Figur 4.2 Der Nutzungsvorgang "Aufteilen" in einer GUI. Ansicht der GUI eines Anwendungs-Programms (oder einer Funktion oder App) das/die auf den REST-Service zugreift. MIT-Objekt A wird erst nach erfolgreich abgeschlossener Transaktion ungültig.

Figur 4.3 Der Nutzungsvorgang "Aufteilen" als Prozessdiagramm. Der Client 30 erfragt vom Server 20 zunächst zwei freie Paare aus Identifier und Appendix. Aus diesen Daten erzeugt er lokal neue MIT-Objekte Y und Z. Der Server 20 berechnet ebenfalls den Restbetrag und speichert zu Identifier Y sowie Identifier Z jeweils Fingerabdruck und Siegel

Figur 5.1 Der Nutzungsvorgang "Übertragen" als Flussdiagramm. Hier ohne Authentifikation.

Figur 5.2 Der Nutzungsvorgang "Übertragen" in einer GUI. Ansicht der GUI eines Anwendungs-Programms, welches auf den REST-Service zugreift. MIT-Objekt A wird erst nach erfolgreich abgeschlossener Transaktion ungültig.

Figur 5.3 Der Nutzungsvorgang "Übertragen" als Prozessdiagramm. Der Client 30 erfragt vom Server 20 zunächst ein freies Paar aus Identifier und Appendix. Aus diesen Daten erzeugt er lokal das neue MIT-Objekt Y. Der Server 20 speichert zu Identifier Y Fingerabdruck und Siegel.

Figur 6.1 Der Nutzungsvorgang "Überprüfen" als Flussdiagramm, hier ohne Authentifikation.

Figur 6.2 Der Nutzungsvorgang "Überprüfen" in einer GUI. Ansicht der GUI eines Anwendungs-Programms, welches auf den REST-Service zugreift.

Figur 6.3 Der Nutzungsvorgang "Überprüfen" als Prozessdiagramm. Die Gültigkeitsprüfung erfordert die Authentifizierung des Eigentümers des MIT-Objekts; schlägt sie fehl, tritt der Fehlerfall ein.

Figur 7 Ein- und Ausgabevorgang. Bei der Ausgabe eines MIT-Objekts wird der Geldbetrag vom klass. Guthabenkonto abgebucht sowie ein Tabelleneintrag auf dem MIT-Server erstellt.

Figur 8 Versenden eines MIT-Objekts im Anhang einer E-Mail, in zwei Abschnitten auf zwei Seiten.

MIT-Objekte sind gering abstrahiertes, personalisiertes Bargeld. Ein MIT-Objekt ordnet einem Nutzer einen Geldbetrag zu. Der Nutzer kauft bei seiner Bank ein MIT-Objekt für einen Geldbetrag seiner Wahl. Alternativen dazu sind schach personifizierte und von Personen losgelöste MIT-Objekte.

Ein personifizierten MIT-Objekt hat (zumindest) folgende Eigenschaften:

- Einen Geldbetrag, z.B. 34.507,88 EUR (als Guthaben)
- Einen Nutzernamen des Besitzers, z.B. bufferfly86@bank25.de
- Einen Appendix zum Verbergen einer Nutzername-Guthaben-Beziehung
- Einen Bezeichner aus Symbolen zum Wiedererkennen, z.B. 2h8ID7S3vz51L06124Xv8aYtlyZE0WuDL9h0T8, also z.B. aus 256 Zeichen des ASCII Codes mit Gross- und Kleinschreibung und Zahlen darin.

**Besondere Merkmale eines MIT-Objekts ...**

- Der Geldwert (das Guthaben) ist an eine menschenlesbare Datei (genauer: die Menge ihrer Kopien) gebunden. Überweisungen entsprechen dem Versenden einer Datei (z.B. per E-Mail)
- Das Guthaben liegt beim Nutzer, nicht bei der Bank. (Vgl. digitaler Geldbeutel)
- Das MIT-Objekt ist für Bezahlvorgänge im Internet besonders geeignet.

Ein personifiziertes MIT-Objekt ordnet einem Nutzer einen Geldbetrag zu. Die Bank hat nur noch die Aufgabe, Nutzungsvorgänge auf den MIT-Objekten zu ermöglichen sowie die Gültigkeit der MIT-Objekte zu regeln. Durch dieses zweistufige Verfahren wird die Information, welcher Nutzer wie viel Geld hat, aufgespalten in eine Zuordnung von Nutzer und Geldbetrag (das MIT-Objekt) und eine Entscheidung über die Gültigkeit einer solchen Zuordnung (Übereinstimmung des Fingerabdrucks).

Um MIT-Objekte nutzen zu können, wird ein Benutzerkonto angelegt. Es dient der Identifikation (d.h. der Wiedererkennung) des (Be)Nutzers und der Authentifikation (d.h. Erbringung eines Berechtigungsnachweises) zur Ausführung von Nutzungsvorgängen durch den Nutzer (siehe unter "Verwendung").

MIT-Objekte sind gering abstrahiertes personalisiertes Bargeld. Sie haben einen Besitzer (Eigentümer), aber einige Eigenschaften von Bargeld entfallen:

- Die Stückelung. Der Wert eines MIT-Objekts ist cent-genau einstellbar.
- Die Bindung des Wertes an das Objekt. MIT-Objekte können kopiert werden, ohne dass sich ihr Wert dadurch vervielfachen würde. Bei ihnen ist der Wert an den Bezeichner (Identifier) gebunden. Je zwei MIT-Objekte, die denselben Bezeichner haben, werden als identisch angesehen. Im Gegensatz zu Bargeld, kann also (und sollte sogar) durch das Erstellen von Sicherungskopien dem Verlust vorgebeugt werden.
- Personenbezogen. Im Gegensatz zu Bargeld gehört ein MIT-Objekt immer schon jemandem. Der Nutzername des Besitzers steht im MIT-Objekt selbst (nicht auf der Oberfläche, sondern in der Datei). MIT-Objekte sind nicht übertragbar und folglich für Diebe uninteressant. Diese Eigenschaft erlaubt den Versand von MIT-Objekten über unsichere Kanäle, z.B. im Anhang einer E-Mail.

Ein schwach personifiziertes MIT-Objekt hat einen "Nutzer", der für alle Wertträger gleich ist.
Ein nicht personifizierten MIT-Objekt hat (zum Beispiel als MIT np) folgende Eigenschaften:

- Einen Geldbetrag, z.B. 34.507,88 EUR (als Guthaben)
- Einen Bezeichner aus Symbolen zum Wiedererkennen, z.B. 2h81D7S3vz51L06124Xv8aYtlyZE0WuDL9h0T8, also z.B. aus 256 Zeichen des ASCII Codes mit Gross- und Kleinschreibung und Zahlen darin.

**Besondere Merkmale eines MIT np Objekts ...**

- Der Geldwert (das Guthaben) ist an eine menschenlesbare Datei (genauer: die Menge ihrer Kopien) gebunden. Überweisungen entsprechen dem Versenden einer Datei (z.B. per E-Mail).
- Das Guthaben liegt beim Nutzer, nicht bei der Bank. (vgl. digitaler Geldbeutel)
- Das MIT-Objekt np ist für Bezahlvorgänge im Internet besonders geeignet.

**Verwendung ...**

Der Benutzer oder Nutzer kauft (siehe unter "Erwerb") bei seiner Bank ein MIT-Objekt für einen Geldbetrag seiner Wahl. Über ein Anwendungsprogramm (z.B. einer App auf einem Smartphone) kann er unter Nutzung des REST-Webdienstes folgende Vorgänge (im Folgenden Nutzungsvorgänge genannt) mit dem MIT-Objekt durchführen:

- Der Nutzer kann ein gültiges MIT-Objekt, als dessen Besitzer er sich ausweisen kann, einem anderen Nutzer **übereignen (sog. dedicate)**. Der Nutzername des resultierenden MIT-Objekts stimmt mit dem Namen des Nutzers überein, an den das MIT-Objekt übereignet wurde. Der Betrag wird bei diesem Vorgang nicht verändert. Der Nutzer, an den das MIT-Objekt übereignet wurde, wird zu dessen Besitzer (Eigentümer). Das übereignete MIT-Objekt wird bei diesem Vorgang ungültig und kann nicht mehr verwendet werden.
- Der Nutzer kann von jedem MIT-Objekt, als dessen Besitzer er sich ausweisen kann, dessen **Gültigkeitsstatus in Erfahrung bringen (sog. validate).**
- Der Nutzer kann von einem gültigen MIT-Objekt, als dessen Besitzer er sich ausweisen kann, ein MIT-Objekt beliebigen Betrages **abspalten (sog. split)**. Der Betrag des abgespaltenen MIT-Objekts ist durch den Betrag des MIT-Objekts, von dem es abgespalten wird, nach oben begrenzt. Der Nutzer erhält zwei neue gültige MIT-Objekte - eines über den abgespaltenen Betrag und eines über den Restbetrag. Das MIT-Objekt, von dem der Betrag abgespalten wurde, wird bei diesem Vorgang ungültig und kann nicht mehr verwendet werden.
- Der Nutzer kann zwei gültige MIT-Objekte, als deren Besitzer er sich ausweisen kann, in ein einzelnes MIT-Objekt **zusammenführen (sog. merge)**. Der Betrag des resultierenden MIT-Objekts stimmt mit der Summe der Beträge der beiden zusammengeführten MIT-Objekte überein. Der Nutzer erhält ein neues gültiges MIT-Objekt, dessen Betrag mit der Summe der Beträge der beiden zusammengeführten MIT-Objekte übereinstimmt. Die beiden zusammengeführten MIT-Objekte werden bei diesem Vorgang ungültig und können nicht mehr verwendet werden.

Um die Wahrscheinlichkeit eines Verlusts von Geldbeträgen zu verringern, kann und sollte der Nutzer in beliebigem Umfang Sicherungskopien von einem MIT-Objekt erstellen. Um ein MIT-Objekt zu kopieren, kann der übliche Kopiervorgang des Dateisystems verwendet werden. Selbstverständlich kann ein MIT-Objekt wie bereits oben beschrieben, nur einmalig (zum Bezahlen) verwendet werden.

**Gültigkeitsprüfung ...**

Der Nutzer übermittelt dem Server der Bank den Geldbetrag, den Nutzernamen des Eigentümers (Owner), den Appendix, den Bezeichner (Identifier oder Bezeichner) des MIT-Objekts, von dem er den Gültigkeitsstatus in Erfahrung bringen möchte sowie das Passwort des Eigentümers.

Bei zutreffendem Passwort wird zunächst überprüft, ob zu dem erhaltenen Bezeichner ein Eintrag auf dem Server gespeichert ist. Falls nicht, antwortet der Server mit dem Status "ungültig". Ansonsten liegen dem Server zum Bezeichner des MIT-Objekts zwei Fingerabdrücke (Hash-Werte) vor.

Den ersten Hash-Wert vergleicht er mit dem Ergebnis der Anwendung einer kryptografisch sicheren Einwegfunktion (z.B. SHA512) auf diejenige Zeichenfolge, die sich durch unmittelbares Hintereinanderschreiben (sog. Konkatenation) der Werte von Geldbetrag, Owner und Appendix ergibt. Den zweiten Hash-Wert (das sog. Siegel) vergleicht er mit dem Ergebnis der Anwendung der Einwegfunktion auf den Appendix allein. Stimmt in beiden Fällen das Ergebnis der Einwegfunktionen mit den gespeicherten Fingerabdrücken überein, antwortet der Server mit dem Status "gültig".

Anderenfalls wird "ungültig" geantwortet.

Bei nicht zutreffendem Passwort wird geantwortet, dass der Nutzer sich nicht als zur Gültigkeitsprüfung berechtigt ausgewiesen hat (Authentifizierung fehlgeschlagen) und diese deshalb nicht durchgeführt wird.

**Erwerb** ...

Der Nutzer kauft bei der Bank ein MIT-Objekt über einen bestimmten Geldbetrag. Zu diesem Zweck wird der Betrag von seinem gewöhnlichen Bankkonto abgebucht oder der Nutzer überweist der Bank von seinem gewöhnlichen Bankkonto den Betrag oder der Nutzer zahlt den Betrag in bar bei der Bank ein. Verfügt der Nutzer bereits über ein Nutzerkonto für MIT-Objekte, erzeugt der Server der Bank ein MIT-Objekt, das den Nutzernamen, den Betrag sowie zwei zufällige und un-korrelierte Werte für den Bezeichner sowie den Appendix enthält.

Der Server kann dazu in einem ersten Schritt eine kryptografisch sichere Einwegfunktion auf diejenige Zeichenfolge anwenden, die sich durch unmittelbares Hintereinanderschreiben (sog. Konkatenation) von Betrag, Nutzername und Appendix ergibt. Das Ergebnis stellt den Fingerabdruck des MIT-Objekts dar. In einem weiteren Schritt kann der Server die Einwegfunktion auf den Appendix anwenden. Das Ergebnis stellt das Siegel des Appendix dar. Fingerabdruck und Siegel legt der Server zum Bezeichner ab. Ein Beispiel dieser Funktion ist der sog. Secure Hash Algorithm der Ausgabelänge von 512 Bit (SHA512).

Der Server schreibt das MIT-Objekt als Datei auf einen austauschbaren Datenträger oder sendet das es per E-Mail oder SMS an eine vom Kunden angegebene Adresse oder druckt es aus oder macht es dem Nutzer auf andere technische Weise zugänglich und verfügbar. Solange der Nutzer der Bank nicht den Erhalt des MIT-Objekts bestätigt hat, verwehrt der Server alle Nutzungsvorgänge für das ausgegebene MIT-Objekt. Nachdem der Nutzer den Erhalt des MIT-Objekts gegenüber der Bank bestätigt hat, löscht die Bank alle während des Erstellungsvorgangs angefallenen Daten einschließlich aller eventuell erstellter Kopien des MIT-Objekts aus ihrem Netzwerk.

Die Bank behält einzig den folgenden Eintrag auf dem Server: Bezeichner, Fingerabdruck und Siegel.

Anhand der Daten auf dem Server der Bank können folgende Fragen praktisch nicht beantwortet werden:

- Über welchen Geldbetrag in MIT-Objekten verfügt Nutzer X
- Besitzt Nutzer X ein MIT-Objekt ?
- Besitzt Nutzer X ein MIT-Objekt mit dem Betrag Y ?
- Gibt es ein MIT-Objekt mit dem Betrag Y ?

Dennoch kann aufgrund der Daten Bezeichner und Fingerabdruck die Gültigkeit eines gegebenen MIT-Objekts entschieden werden.

**Deutung des Zahlungsvorgangs im Bereich der MIT-Objekte ---**

Beim Nutzungsvorgang **dedicate** wird ein MIT-Objekt mit neuem Eigentümer-Eintrag über denselben Geldbetrag erzeugt, während das MIT-Objekt mit dem bisherigen Eigentümer-Eintrag ungültig wird (weiter vorhanden ist, aber verfällt). Bei dieser Umwidmung wird der Geldbetrag dem Empfänger überschrieben. Der Sender nutzt ein gewöhnliches Verfahren zur Daten-Übermittlung, z.B. E-Mail-Anhang, SMS, MMS, um dem Empfänger das MIT-Objekt zu schicken.

**Technische Umsetzung ...**

Ein MIT-Objekt kann eine XML-Datei sein, die gemäß UTF-8 kodiert ist und deren Wurzel den Namen MIT-Objekt oder "MoneyItem" trägt. Die Wurzel enthält im Ausführungsbeispiel genau vier Blattknoten: Amount, Owner, Appendix, Identifier.

```xml
<?xml version="1.0" encoding="UTF-8"?>
<MoneyItem Algorithm="SHA512">
	<Amount>26.020,00 EUR </Amount>
	<Owner>achim@meineBank.de</Owner>
	<Appendix>fUogWeMqketugjepo5802T</Appendix>
	<Identifier>2h8ID7S3vz51L06124Xv8aYt1yZE0WuDL9h0T8</Identifier>
</MoneyItem>
```


Amount ist eine nicht-negative Dezimalzahl mit zwei Nachkommastellen, die immer angegeben werden muss. Tausender-Trennzeichen ist der Punkt. Das Währungs-Symbol oder die EUR Benennung steht durch Leerzeichen abgetrennt. Der entsprechende reguläre Ausdruck für den Amount lautet

0|[1-9][0-9]?[0-9]?{.[0-9][0-9][0-9]}*,[0-9][0-9] €

Oder

0|[1-9][0-9]?[0-9]?{.[0-9][0-9][0-9]}*,[0-9][0-9] EUR

**Owner**

Der Benutzername hat das Format einer E-Mail-Adresse, z.B. achim@meineBank.de, wie oben eingefügt.

**Appendix**

Eine Zufallszahl aus der Menge {0, ..., $2^{1024}$-1} in Basis64-Darstellung dient zur Trennung der Information, welcher Nutzer welchen Geldbetrag besitzt, von der Information, welche gültigen MIT-Objekte sich in Umlauf befinden. Erstere liegt beim Nutzer, während letztere bei der Bank liegt.

Im Beispiel ist es
fUogWeMqketugjepo5802T

**Identifier**

Diese zweite Zufallszahl aus der Menge {0, ..., $2^{384}$-1} in Basis64-Darstellung dient zum Auffinden der Soll-Daten für den Fingerabdruck eines MIT-Objekts. Folglich müssen zwei MIT-Objekte, die denselben Identifier haben, auch denselben Fingerabdruck liefern, um gültig zu sein.

Im Beispiel ist es
fUogWeMqketugjepo5802T

Für jedes gültige MIT-Objekt gibt es auf dem zentralen Webserver einen
Datenbankeintrag wie folgt
(Identifier, Fingerabdruck, Siegel)

Dabei ist der Fingerabdruck das Ergebnis der Anwendung der in der Eigenschaft "Algorithmus" des XML-Elements namens MIT-Objekt oder "MoneyItem" angegebenen Einwegfunktion (z.B. SHA512 für Secure Hash Algorithm mit einer Ausgabelänge von 512 Bits) auf die Konkatenation (d.h. unmittelbares Hintereinanderschreiben) von Betrag, Nutzername und Appendix in dieser Reihenfolge. Das Siegel ist das Ergebnis der Anwendung der o.g. Einwegfunktion auf den Appendix.

Der Hashwert aus der Konkatenation von Betrag und Nutzername ist also detrivialisiert durch den Appendix. Auf diese Weise werden Regenbogentabellen auf der Basis von Beträgen und Nutzernamen für Angreifer wertlos.

Die Bank stellt einen Internet-Server zur Verfügung, auf dem folgender REST-Service zur Verwaltung der MIT-Objekte angeboten wird

- Verify(Amount, Owner, Appendix, Identifier, Secret) As Boolean
- Split(Amount, Owner, Appendix, Identifier, AmountPart, AppendixPart, IdentifierPart, AppendixRemainder, IdentifierRemainder, Secret) As Boolean

- Merge(AmountA, AmountB, IdentifierA, AppendixA, IdentifierB, AppendixB, Owner, AppendixResult, IdentifierResult, Secret) As Boolean
- Dedicate(Amount, Owner, Identifier, Appendix, Recipient, AppendixResult, IdentifierResult, Secret) As Boolean
- Create(Amount, Owner, Identifier, Appendix, Secret) As Boolean
- Vacancies(Number As Integer) As List(Of Pair(Of String, String))
- Users() As List(Of String)

Bei allen Funktionen des REST-Services handelt es sich um Transaktionen. Deshalb kehrt das System, falls die Bearbeitung an irgendeiner Stelle - z.B, durch einen Stromausfall - abbricht, nach Wiederanfahren in den Zustand unmittelbar vor Beginn der Transaktion zurück.

Insbesondere geht weder Geld verloren, noch entsteht Geld aus dem Nichts. Zu diesem Zweck erzeugt das ablaufende System des Nutzers, nachdem es eine zum Bau der aus dem beabsichtigten Nutzungsvorgang resultierenden MIT-Objekte ausreichende Menge allgemein verwendbarer Bestandteile noch nicht existierender MIT-Objekte vom Server geliefert bekommen hat (siehe Funktion namens Vacancies), die aus einem Nutzervorgang resultierenden MIT-Objekte zunächst eigenständig und speichert diese ab, ohne die in den Nutzungsvorgang eingehenden MIT-Objekte zu löschen.

Das System löscht die eingehenden MIT-Objekte nur dann, wenn es eine Erfolgsmeldung des Servers empfangen hat.

Wird eine Fehlermeldung empfangen, löscht das System die resultierenden MIT-Objekte.

Wird keine Antwort des Servers empfangen, behält das System sowohl die eingehenden als auch die resultierenden MIT-Objekte zurück.

Eine nachgelagerte Gültigkeitsprüfung zeigt an, ob die Transaktion zurück gesetzt oder erfolgreich durchgeführt wurde.

Ein nicht personen-bezogenes MIT-Objekt (MIT np)kann eine XML-Datei sein, die gemäß UTF-8 kodiert ist und deren Wurzel den Namen MIT-Objekt oder "MoneyItem" trägt. Die Wurzel enthält im Ausführungsbeispiel genau drei Blattknoten: Amount, Appendix, Identifier.

```xml
<?xml version="1.0" encoding="UTF-8"?>
<MoneyItem Algorithm="SHA512">
        <Amount>6.120,00 EUR </Amount>
        <Appendix>fUogWeMqketugjepo5802T</Appendix>
        <Identifier>2h8ID7S3vz51L06124Xv8aYt1yZE0WuDL9h0T8</Identifier>
</MoneyItem>
```

Amount ist eine nicht-negative Dezimalzahl mit zwei Nachkommastellen, die immer angegeben ist. Tausender-Trennzeichen ist der Punkt. Das Währungs-Symbol oder die EUR Benennung steht durch Leerzeichen abgetrennt. Der entsprechende reguläre Ausdruck für den Amount lautet

0|[1-9][0-9]?[0-9]?{.[0-9][0-9][0-9]}*,[0-9][0-9] €

Oder

0|[1-9][0-9]?[0-9]?{.[0-9][0-9][0-9]}*,[0-9][0-9] EUR

Die Aussagen von oben zu Appendix und Identifier gelten hier auch, nur ohne "owner".

**Verwertung ...**

Eingang und Ausgang des Bereiches der MIT-Objekts (d.h. Erwerb und Rückgabe) sind jeweils mit einem prozentualen Anteil belastet. Nutzungsvorgänge innerhalb des Bereiches der MIT-Objekte sind kostenlos.

1. MIT-Objekte sind ein Zahlungsmittel neben Giralgeld und Bargeld. Bei der Umwandlung eines Geldbetrages von einem anderen Zahlungsmittel zum MIT-Objekt wird ein Anteil von z.B. einem Prozent des umgewandelten Geldbetrages abgeschöpft oder aufgeschlagen.

2. Alle Nutzungsvorgänge (validate, merge, ...) innerhalb des Systems der MIT-Objekte können dann kostenlos sein oder bleiben.

3. Bei der Umwandlung eines Geldbetrages aus dem Bereich der MIT-Objekte hin zu einem anderen Zahlungsmittel wird ein Anteil von einem Prozent (1%) des Geldbetrages abgeschöpft oder aufgeschlagen.

Weitere Eingriffspunkte, z.B. Erhebung einer Pauschale pro Nutzungsvorgang, sind auch möglich und parallel vorgeschlagen, wenn der Großteil der finanziellen Transaktionen über MIT-Objekte abgewickelt wird.

Wie die MIT Objekte verwendet werden, zum Bezahlen oder Spenden, ist oben in der Beschreibung auch erklärt, wird aber nicht beansprucht, da es sich dabei um geschäftliche Vorgänge (sog. nicht technische Geschäftsmethoden) handelt. Indes färbt das nicht auf die technischen Wertträger ab, die durchaus technisch sind und technisch aufgebaut sind. Ein technisches Skalpell kann auch zu einem nicht erteilbaren chirurgischen Verfahren verwendet werden, gleichwohl ist die technische Ausbildung des Skalpells dem Patentschutz zugänglich. So auch ATM-Maschinen (vulgo: "Geldautomaten"), die beeindruckend technisch sind und arbeiten, aber zu geschäftlichen Zwecken verwendet werden. Das macht sie nicht untechnisch. Die Liste der Beispiele ließe sich fortsetzen ...

**Patentansprüche**

1. **Zahlungsmittel** für einen Bezahlvorgang oder zum Ersatz einer buchbaren Währung oder eines physischen Bargelds,

   - wobei eine Zuordnung eines Geldbetrags zu einer Person durch eine Textdatei kleiner 1 kB (im Folgenden: Wertträger) oder durch eine Anzahl von Kopien dieser verwirklicht ist;
   - der Wertträger einen Identifier enthält, anhand dessen der Wertträger unter allen in Umlauf befindlichen Wertträgern eindeutig identifizierbar ist;

   und

   - auf einem zentralen Webserver als ein Wiedererkennungs-Schlüssel ein Hash-Wert einer Hash-Funktion jedes der Wertträgers geführt wird, gespeichert ist und/oder abrufbar ist;

   oder

   - jedem der Wertträger ein Hash-Wert einer Hash-Funktion als ein individueller Wiedererkennungsschlüssel zugeordnet ist, um mit auf einem zentralen Webserver gespeicherten und/oder davon abrufbaren Hash-Werten vergleichbar zu sein, so dass jeder der Wertträger auffindbar oder identifizierbar ist.

2. Zahlungsmittel nach Patentanspruch 1, wobei der zentrale Webserver die Gültigkeit der Zuordnung verwaltet, insbesondere eine Zuordnung entweder gültig oder ungültig ist.

3. Zahlungsmittel nach einem der Patentansprüche 1 oder 2, wobei die Zuordnungs-Information ausschließlich in dem Wertträger gespeichert ist, und anhand der auf dem Webserver gespeicherten Hashwerte eine Zuordnung von einem Geldbetrag zu einer Person insbesondere nicht rekonstruierbar ist.

4. Zahlungsmittel nach Patentanspruch 3, wobei der Wertträger eine zufällige Zeichenfolge (sog. Appendix) gespeichert enthält, die den Aufwand zur Berechnung von Urbildern des auf dem Webserver gespeicherten Hash-Wertes erhöht, insbesondere um ein Vielfaches erhöht.

**5.** Zahlungsmittel nach Patentanspruch 4, wobei der Aufwand zur Berechnung von Urbildern des auf dem Webserver gespeicherten Hash-Wertes um ein Vielfaches erhöhbar ist.

**6.** **Zahlungsmittel** für eine oder statt einer Währung, wobei eine Zuordnung eines Geldbetrags zu einer Person durch eine insbesondere menschenlesbare Textdatei (Wertträger) kleiner 300 Bytes oder eine Menge von deren Kopien verwirklicht ist;

- die Textdatei einen Wiedererkennungsschlüssel (Identifier) enthält, anhand dessen ein bestimmter Wertträger unter allen in Umlauf befindlichen Wertträgern eindeutig identifizierbar ist;

und

- ein zentraler Webserver einen Wiedererkennungs-Schlüssel eines Hash-Werts einer kryptographisch sicheren Hash-Funktion des Wertträgers führt;

oder

- jeder Wertträger als Wiedererkennungs-Schlüssel einen Hash-Werts einer kryptographisch sicheren Hash-Funktion hat oder führt, um diesen Wertträger über einen auf einem zentralen Webserver gespeicherten Wiedererkennungs-Schlüssel vergleichen zu können oder eindeutig identifizieren zu können oder auffinden zu können.

**7.** Zahlungsmittel nach Patentanspruch 6, wobei der zentrale Webserver die Gültigkeit der Zuordnung des Wiedererkennungsschlüssels eines jeden Wertträgers verwaltet, wobei ein webbasiertes System aus mehreren Wertträgern und zumindest einem zentralen Webserver gebildet wird, die interaktionsfähig sind.

**8.** Zahlungsmittel nach Patentansprüchen 6 oder 7, wobei die Zuordnungs-Information ausschließlich in der Textdatei gespeichert ist und anhand des auf dem Webserver gespeicherten Hash-Werts eine Zuordnung von Geldbetrag zu Person nicht rekonstruierbar ist, wobei der Wertträger eine zufällige Zeichenfolge (Appendix) umfasst, die den Aufwand zur Berechnung von Urbildern des oder der auf dem Webserver gespeicherten Hash-Wert(en) erhöht, insbesondere wesentlich erhöht.

**9.** Zahlungsmittel nach einem der Patentansprüche 6 bis 8, wobei mit zumindest einem, bevorzugt allen (im Umlauf befindlichen) Wertträgern wenigstens vier Nutzungsvorgänge möglich sind oder der oder alle Wertträger ausgebildet sind zumindest einen, zwei, drei oder alle vier folgenden Nutzungsvorgänge zu ermöglichen, und zwar in jeder Kombination (Permutation) ...

- **Zusammenfügen:**

  Mindestens zwei gültige Wertträger, die derselben Person zugeordnet sind, sind in einen einzigen Wertträger zusammenführbar, wobei sich ein einziger neuer gültiger Wertträger über die Summe der zusammengeführten Wertträger bildet und die zwei Wertträger ungültig sind oder werden;

- **Aufteilen:**

  Ein gültiger Wertträger wird zu beliebigen Anteilen aufgeteilt, wobei für jeden Teil der Aufteilung ein neuer gültiger Wertträger entsteht und der alte Wertträger ungültig ist oder wird;

- **Übertragen:**

  Ein gültiger Wertträger, der einer Person einen Geldbetrag zuordnet, ist an eine andere, nicht gleiche Person übertragbar, wobei nach der Übertragung der übertragene Geldbetrag als neuer Wertträger mit dem übertragenen Geldbetrag der anderen Person zugeordnet ist und der alte Wertträger ungültig ist;

- **Überprüfen:**

  Ein Wertträger ist auf Gültigkeit überprüfbar.

**10.** Zahlungsmittel nach Anspruch 9, wobei Zusammenfügen (1) ist, Aufteilen (2) ist, Übertragen (3) ist und Überprüfen (4) ist, und der oder alle Wertträger ausgebildet sind zumindest folgenden Nutzungsvorgänge zu ermöglichen, zeilenweise alternativ gelesen wie folgt

1
1,2
1,2,3
1,2,3,4
2
1, 3
1,2,4
1,3,4
2,3,4
3
1, 4
4
2, 4
3,4.

**11.** Zahlungsmittel nach einem der vorigen Ansprüche, wobei die Person für alle Wertträger dieselbe ist, um eine weitest gehende Unabhängigkeit von einer Personalisierung zu erhalten, oder den Wertträger ohne Bindung an einen Eigentümer oder eine Person zu gestalten, insbesondere die für alle Wertträger selbe Person eine fiktive Person ist, zB. der Fachmann des Art. 56 EPC.

**12.** **Zahlungsmittel** für einen Bezahlvorgang oder zum Ersatz einer buchbaren Währung oder eines physischen Bargelds,

- wobei keine Zuordnung eines Geldbetrags zu einer Person, sondern eine Zuordnung des Geldbetrags zu einer Textdatei kleiner 1 kB (im Folgenden: Wertträger) erfolgt;
- der Wertträger einen Identifier enthält, anhand dessen der Wertträger und damit der Geldbetrag eindeutig identifizierbar ist;

und

- auf einem zentralen Webserver als ein Wiedererkennungs-Schlüssel ein Hash-Wert einer Hash-Funktion jedes der Wertträgers geführt wird, gespeichert ist und/oder abrufbar ist;

oder

- jedem der Wertträger ein Hash-Wert einer Hash-Funktion als ein individueller Wiedererkennungsschlüssel zugeordnet ist, um mit auf einem zentralen Webserver gespeicherten und/oder davon abrufbaren Hash-Werten vergleichbar zu sein, so dass jeder der Wertträger auffindbar oder identifizierbar ist.

**13.** **Zahlungsmittel** für eine oder statt einer Währung, wobei keine Zuordnung eines Geldbetrags zu einer Person erfolgt, stattdessen ein Geldbetrag durch eine insbesondere menschenlesbare Textdatei (Wertträger) kleiner 300 Bytes identifizierbar ist;

- die Textdatei einen Wiedererkennungsschlüssel (Identifier) enthält, anhand dessen ein bestimmter Wertträger unter allen in Umlauf befindlichen Wertträgern eindeutig identifizierbar ist;

und

- ein zentraler Webserver einen Wiedererkennungs-Schlüssel eines Hash-Werts einer kryptographisch sicheren Hash-Funktion des Wertträgers führt;

oder

- jeder Wertträger als Wiedererkennungs-Schlüssel einen Hash-Wert einer kryptographisch sicheren Hash-Funktion hat oder führt, um diesen Wertträger über einen auf einem zentralen Webserver gespeicherten Wiedererkennungs-Schlüssel vergleichen zu können und/oder eindeutig identifizieren zu können oder auffinden zu können.

FIG. 1

```
<?xml version ="1.0" encoding ="UTF-8"?>
-<MoneyItem>
    <Amount>129,59 €</Amount>
    <Owner>klarabella@credits.com</Owner>
    <Appendix>vHYkzVIiqbLknvtihJDCbx1pCaDDryI/27bB1hDaJxkq270</Appendix>
    <Identifier>nkRV3xQcQnTeyW+1PsoRAlISx+1kubCLdwLuav0fcBjVTJjL</Identifier>
</MoneyItem>
```

FIG. 2

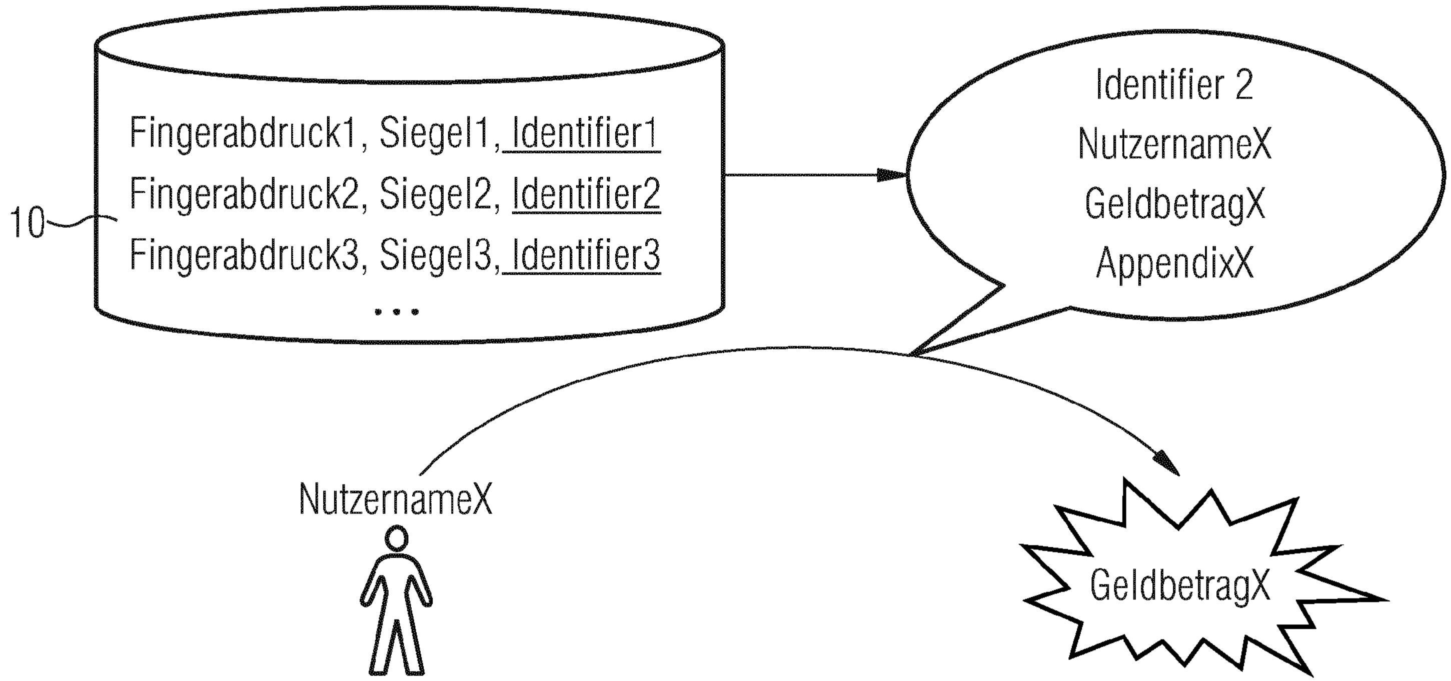

FIG. 3.1

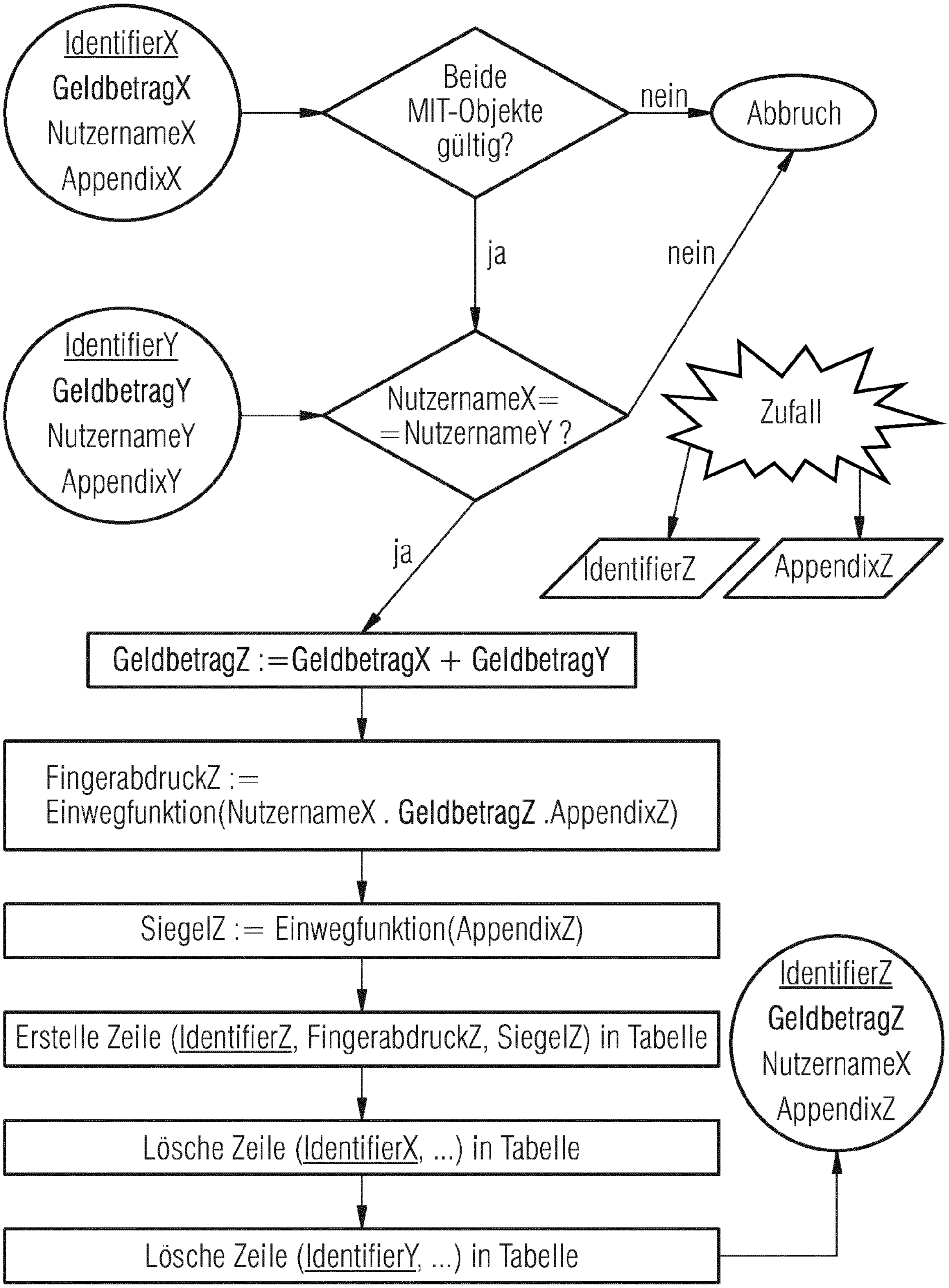
IdentifierX
GeldbetragX
NutzernameX
AppendixX
Beide MIT-Objekte gültig?
nein
Abbruch
ja
nein
IdentifierY
GeldbetragY
NutzernameY
AppendixY
NutzernameX= =NutzernameY ?
Zufall
ja
IdentifierZ
AppendixZ
GeldbetragZ :=GeldbetragX + GeldbetragY
FingerabdruckZ :=
Einwegfunktion(NutzernameX . GeldbetragZ .AppendixZ)
SiegelZ := Einwegfunktion(AppendixZ)
Erstelle Zeile (IdentifierZ, FingerabdruckZ, SiegelZ) in Tabelle
Lösche Zeile (IdentifierX, ...) in Tabelle
Lösche Zeile (IdentifierY, ...) in Tabelle
IdentifierZ
GeldbetragZ
NutzernameX
AppendixZ

FIG. 3.2

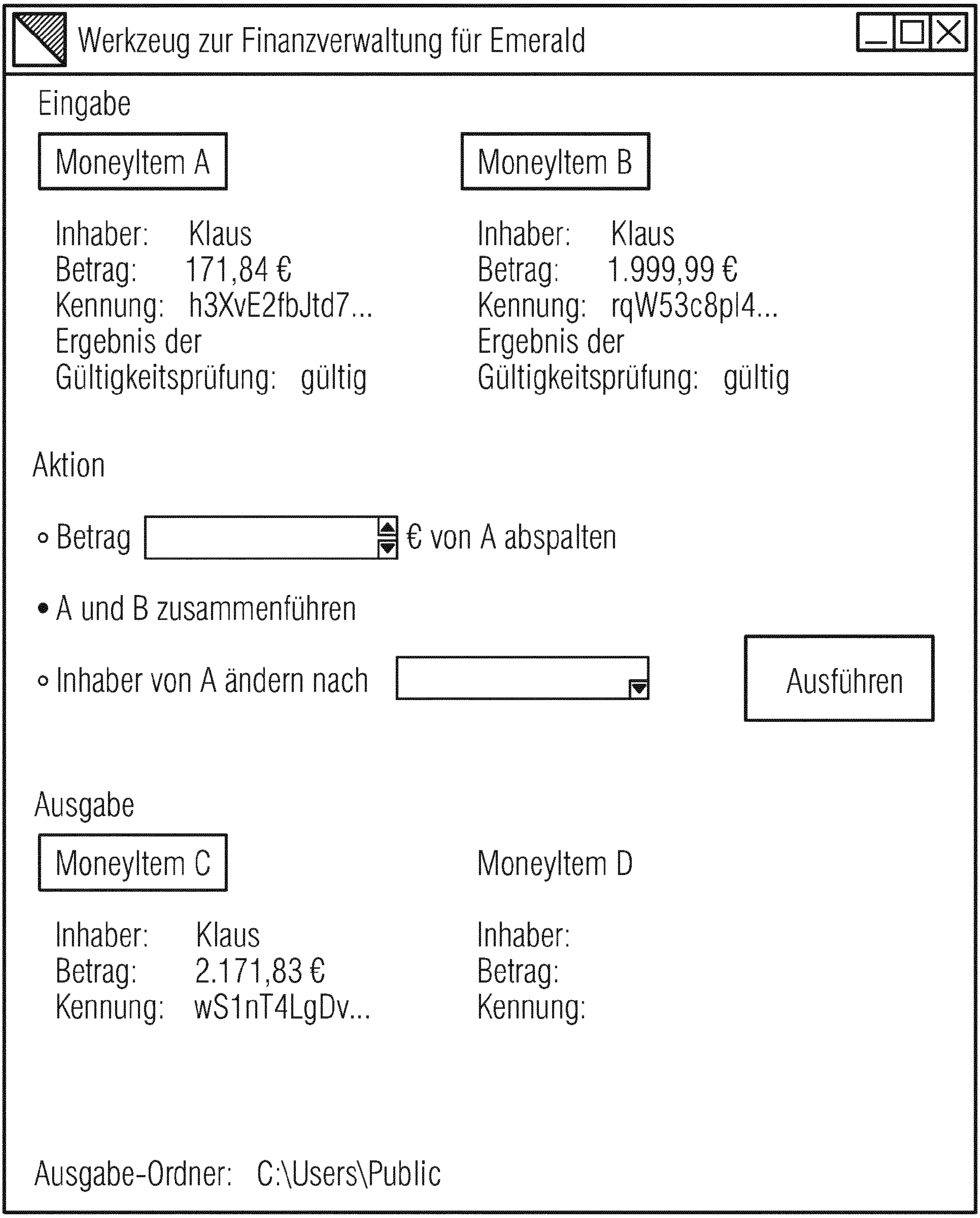
Werkzeug zur Finanzverwaltung für Emerald
Eingabe
MoneyItem A
Inhaber: Klaus
Betrag: 171,84 €
Kennung: h3XvE2fbJtd7...
Ergebnis der
Gültigkeitsprüfung: gültig
MoneyItem B
Inhaber: Klaus
Betrag: 1.999,99 €
Kennung: rqW53c8pl4...
Ergebnis der
Gültigkeitsprüfung: gültig
Aktion
Betrag
€ von A abspalten
A und B zusammenführen
Inhaber von A ändern nach
Ausführen
Ausgabe
MoneyItem C
Inhaber: Klaus
Betrag: 2.171,83 €
Kennung: wS1nT4LgDv...
MoneyItem D
Inhaber:
Betrag:
Kennung:
Ausgabe-Ordner: C:\Users\Public

FIG. 3.3

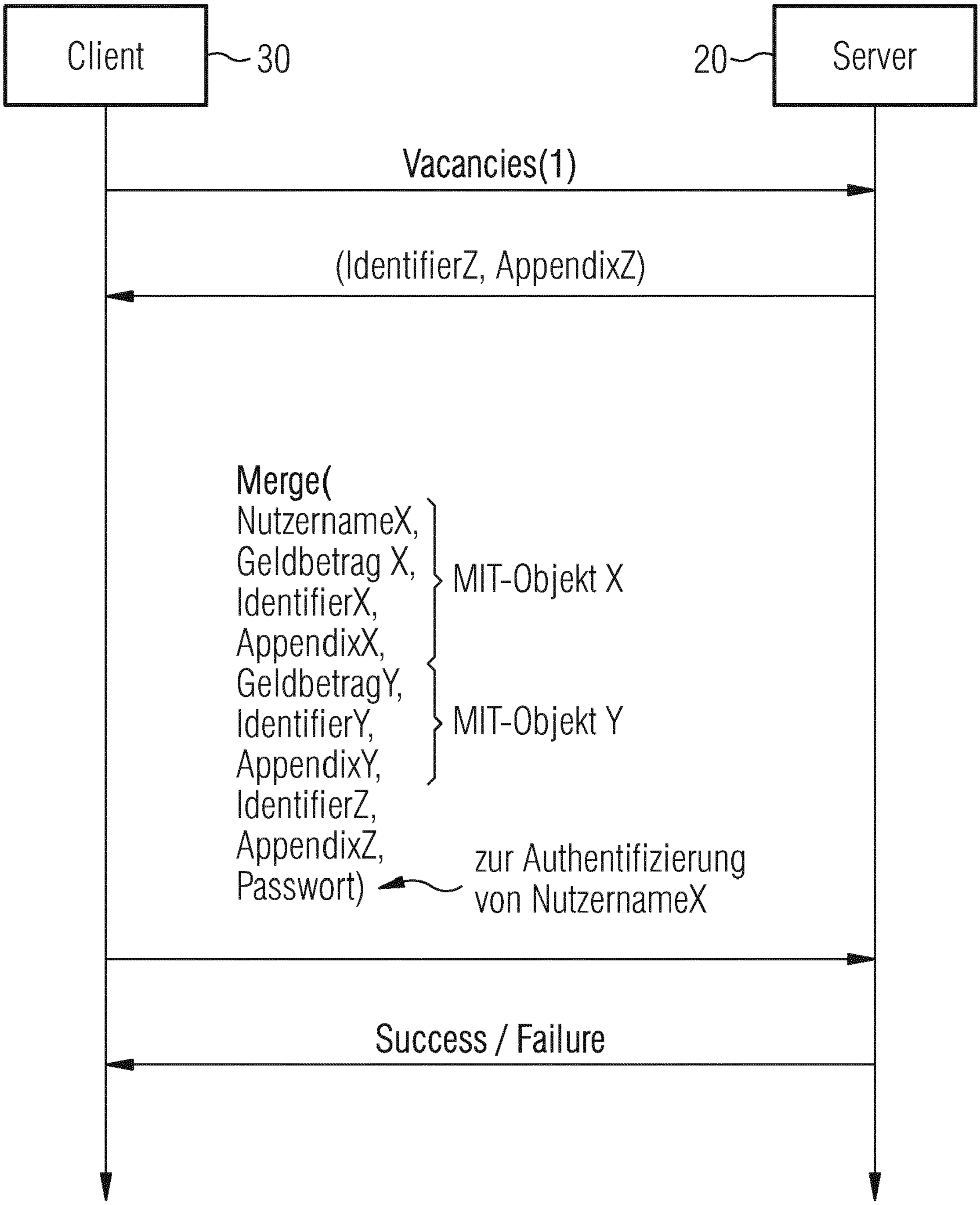
Client
30
20
Server
Vacancies(1)
(IdentifierZ, AppendixZ)
Merge(
NutzernameX,
Geldbetrag X,
IdentifierX,
AppendixX,
GeldbetragY,
IdentifierY,
AppendixY,
IdentifierZ,
AppendixZ,
Passwort)
MIT-Objekt X
MIT-Objekt Y
zur Authentifizierung
von NutzernameX
Success / Failure

FIG. 4.1

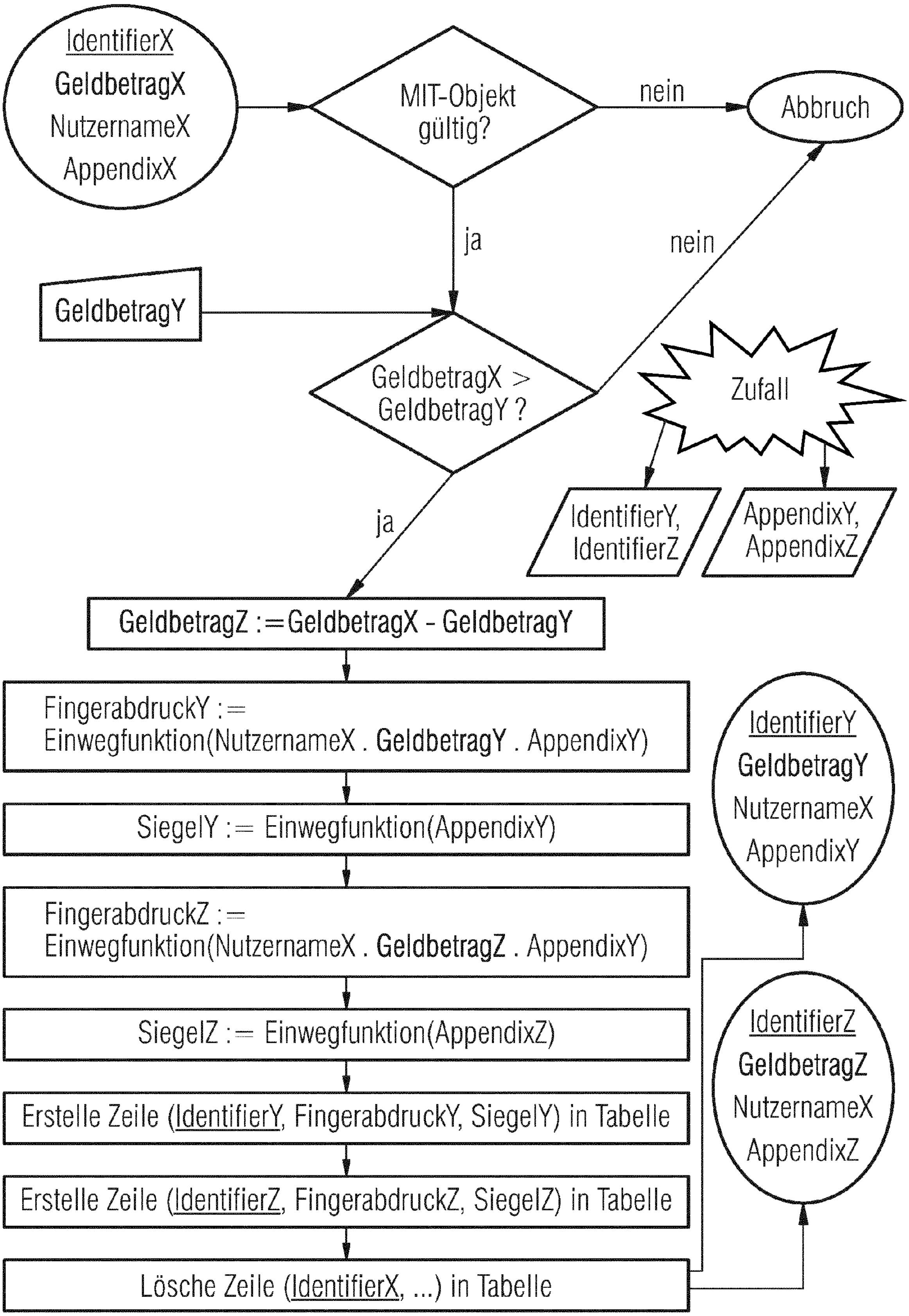
IdentifierX
GeldbetragX
NutzernameX
AppendixX
MIT-Objekt gültig?
nein
Abbruch
ja
nein
GeldbetragY
GeldbetragX > GeldbetragY ?
Zufall
IdentifierY, IdentifierZ
AppendixY, AppendixZ
ja
GeldbetragZ :=GeldbetragX - GeldbetragY
FingerabdruckY := Einwegfunktion(NutzernameX . GeldbetragY . AppendixY)
SiegelY := Einwegfunktion(AppendixY)
FingerabdruckZ := Einwegfunktion(NutzernameX . GeldbetragZ . AppendixY)
SiegelZ := Einwegfunktion(AppendixZ)
Erstelle Zeile (IdentifierY, FingerabdruckY, SiegelY) in Tabelle
Erstelle Zeile (IdentifierZ, FingerabdruckZ, SiegelZ) in Tabelle
Lösche Zeile (IdentifierX, ...) in Tabelle
IdentifierY
GeldbetragY
NutzernameX
AppendixY
IdentifierZ
GeldbetragZ
NutzernameX
AppendixZ

FIG. 4.2

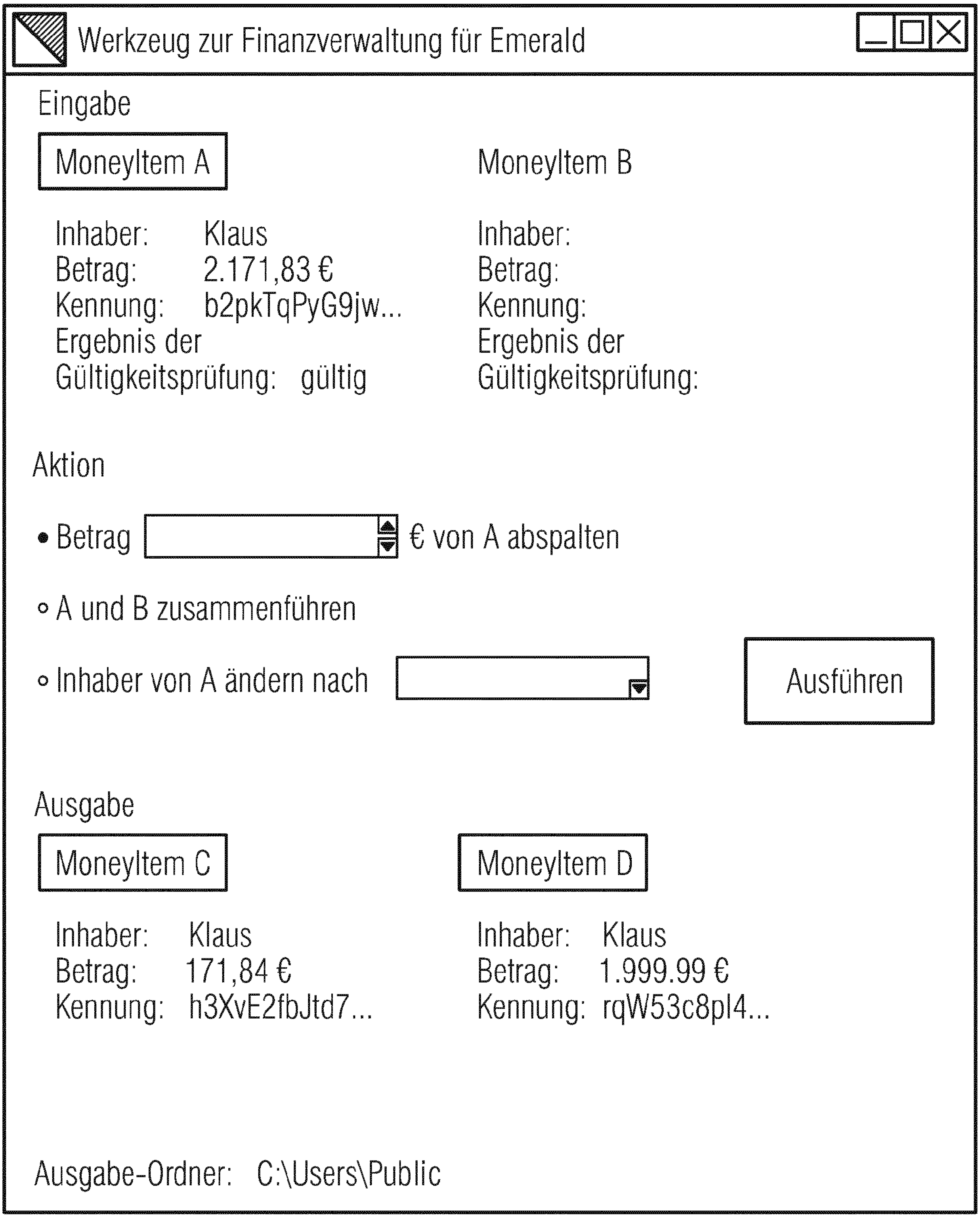
Werkzeug zur Finanzverwaltung für Emerald
Eingabe
MoneyItem A
MoneyItem B
Inhaber: Klaus
Betrag: 2.171,83 €
Kennung: b2pkTqPyG9jw...
Ergebnis der Gültigkeitsprüfung: gültig
Inhaber:
Betrag:
Kennung:
Ergebnis der Gültigkeitsprüfung:
Aktion
Betrag
€ von A abspalten
A und B zusammenführen
Inhaber von A ändern nach
Ausführen
Ausgabe
MoneyItem C
MoneyItem D
Inhaber: Klaus
Betrag: 171,84 €
Kennung: h3XvE2fbJtd7...
Inhaber: Klaus
Betrag: 1.999.99 €
Kennung: rqW53c8pl4...
Ausgabe-Ordner: C:\Users\Public

FIG. 4.3

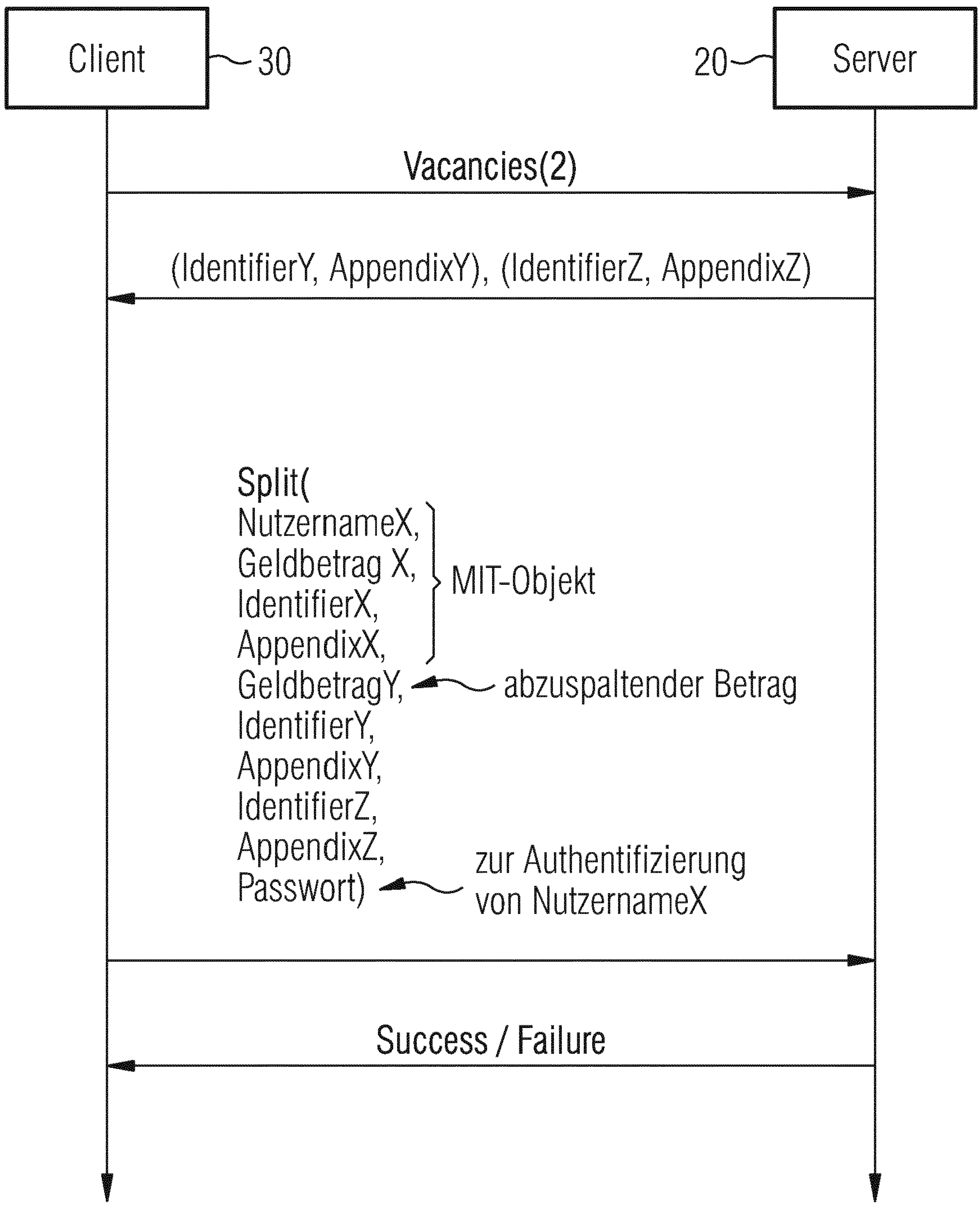
Client
30
20
Server
Vacancies(2)
(IdentifierY, AppendixY), (IdentifierZ, AppendixZ)
Split(
NutzernameX,
Geldbetrag X,
IdentifierX,
AppendixX,
MIT-Objekt
GeldbetragY,
abzuspaltender Betrag
IdentifierY,
AppendixY,
IdentifierZ,
AppendixZ,
Passwort)
zur Authentifizierung
von NutzernameX
Success / Failure

FIG. 5.1

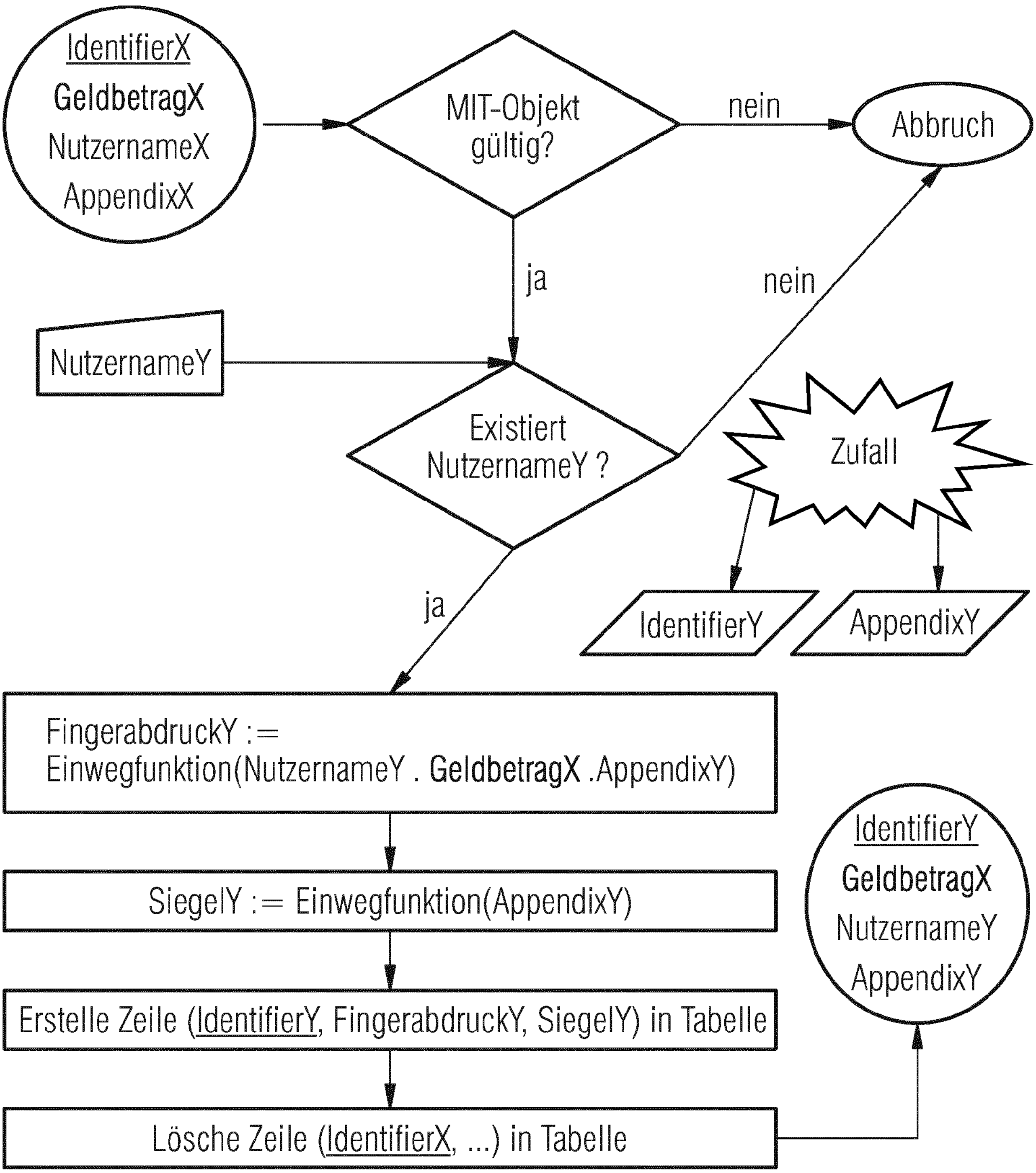
IdentifierX
GeldbetragX
NutzernameX
AppendixX
MIT-Objekt gültig?
nein
Abbruch
ja
nein
NutzernameY
Existiert NutzernameY ?
Zufall
ja
IdentifierY
AppendixY
FingerabdruckY :=
Einwegfunktion(NutzernameY . GeldbetragX .AppendixY)
IdentifierY
GeldbetragX
NutzernameY
AppendixY
SiegelY := Einwegfunktion(AppendixY)
Erstelle Zeile (IdentifierY, FingerabdruckY, SiegelY) in Tabelle
Lösche Zeile (IdentifierX, ...) in Tabelle

FIG. 5.2

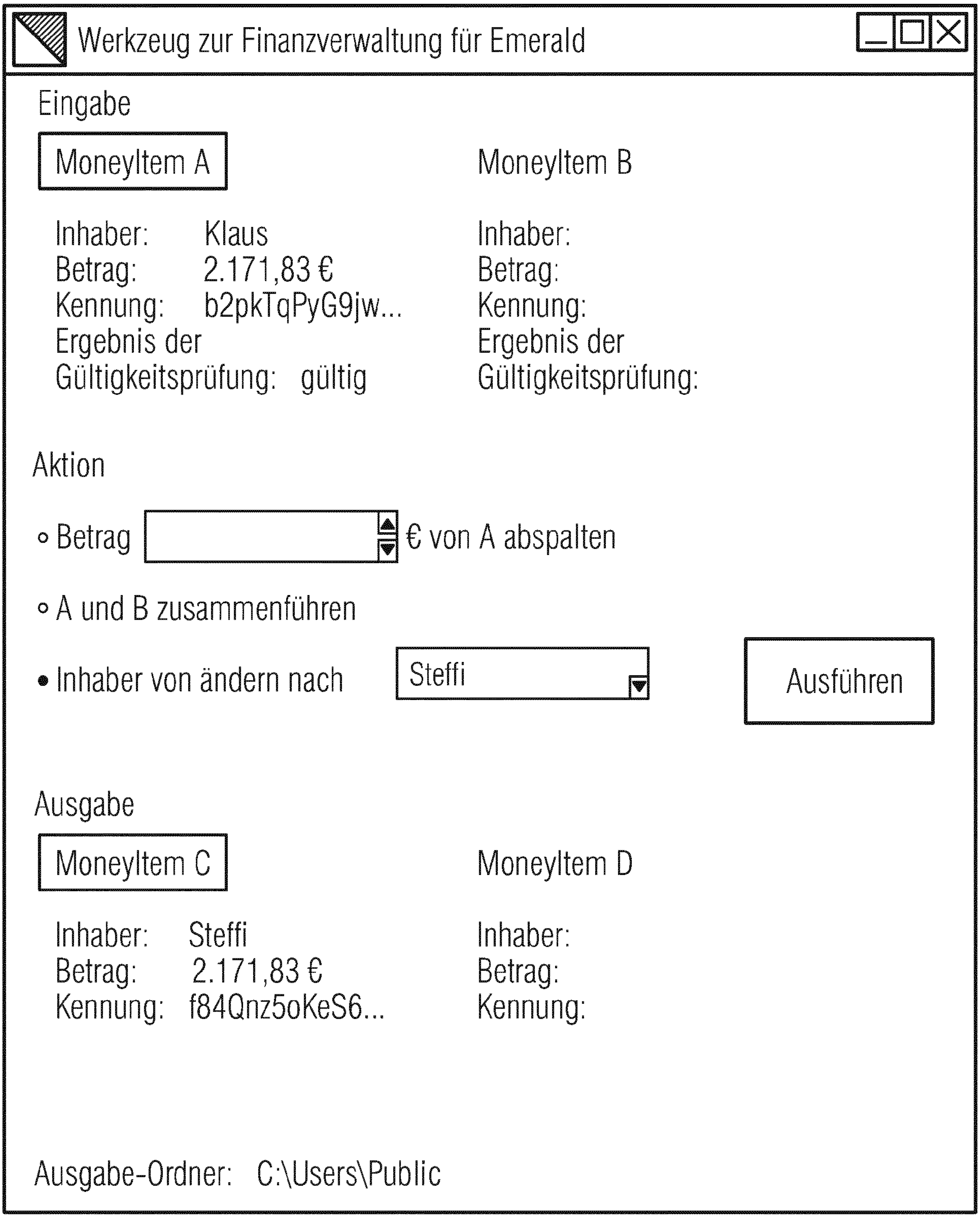
Werkzeug zur Finanzverwaltung für Emerald
Eingabe
MoneyItem A
MoneyItem B
Inhaber: Klaus
Betrag: 2.171,83 €
Kennung: b2pkTqPyG9jw...
Ergebnis der Gültigkeitsprüfung: gültig
Inhaber:
Betrag:
Kennung:
Ergebnis der Gültigkeitsprüfung:
Aktion
Betrag
€ von A abspalten
A und B zusammenführen
Inhaber von ändern nach
Steffi
Ausführen
Ausgabe
MoneyItem C
MoneyItem D
Inhaber: Steffi
Betrag: 2.171,83 €
Kennung: f84Qnz5oKeS6...
Inhaber:
Betrag:
Kennung:
Ausgabe-Ordner: C:\Users\Public

FIG. 5.3

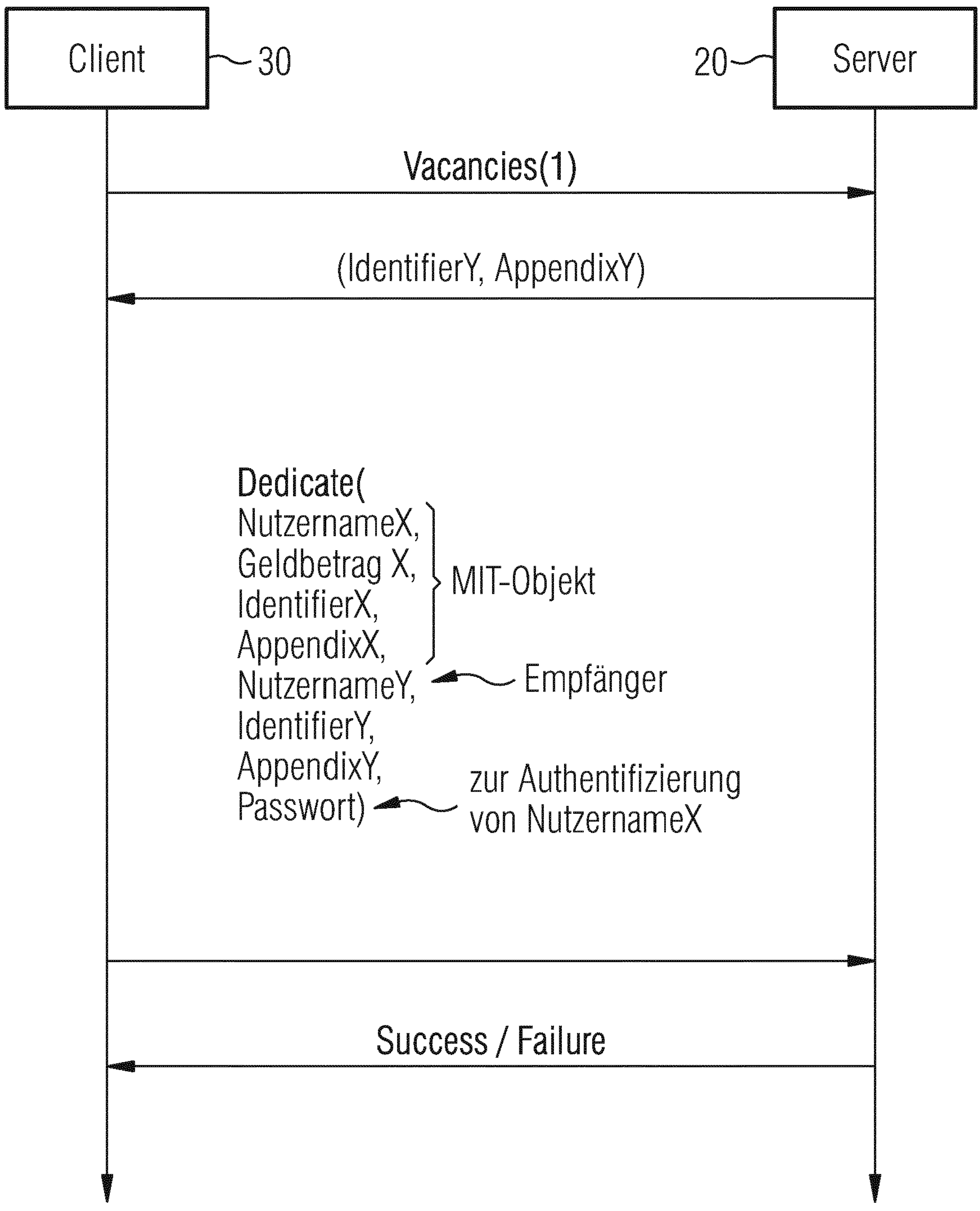
Client
30
20
Server
Vacancies(1)
(IdentifierY, AppendixY)
Dedicate(
NutzernameX,
Geldbetrag X,
IdentifierX,
AppendixX,
MIT-Objekt
NutzernameY,
Empfänger
IdentifierY,
AppendixY,
Passwort)
zur Authentifizierung
von NutzernameX
Success / Failure

FIG. 6.1

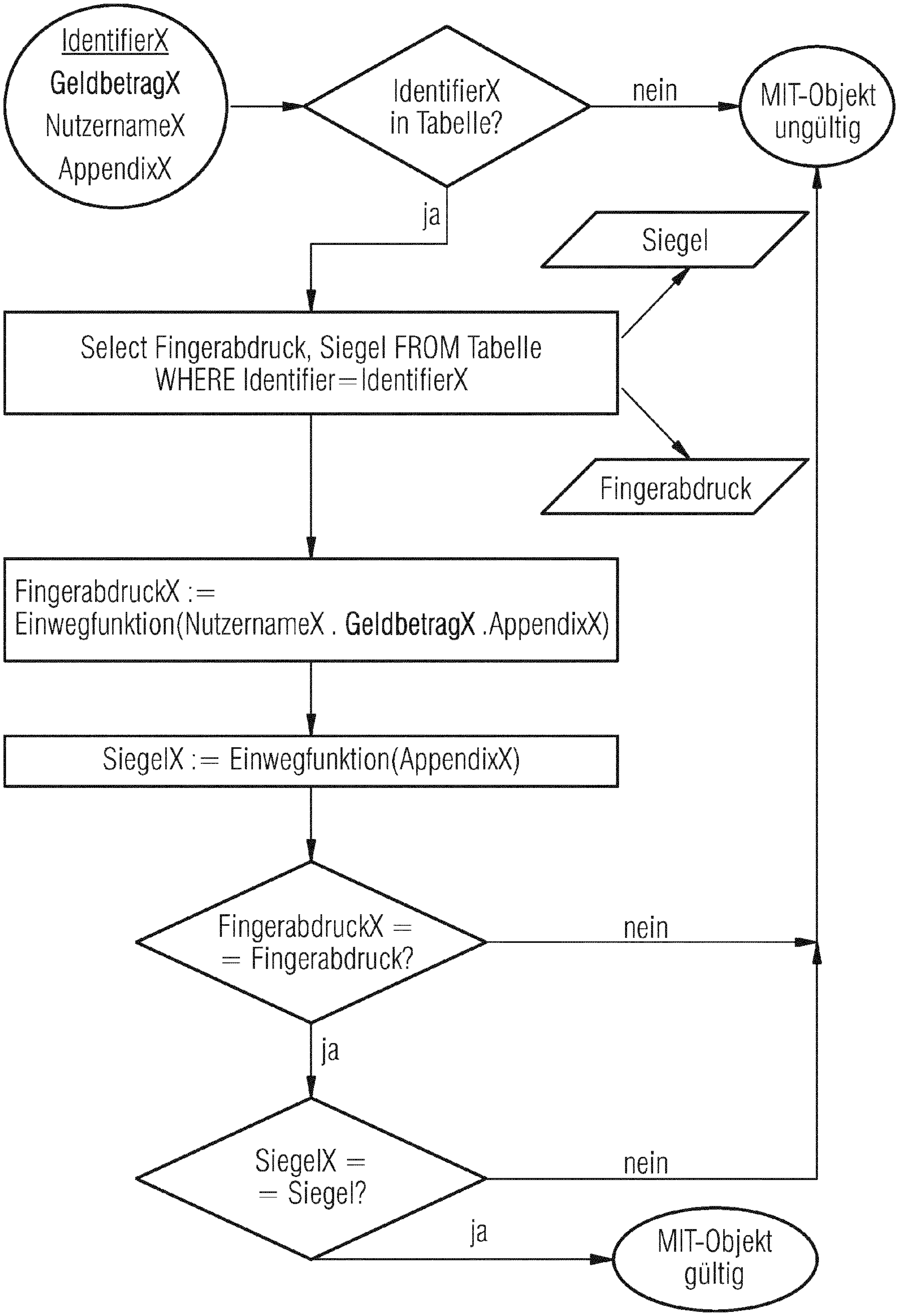
IdentifierX
GeldbetragX
NutzernameX
AppendixX
IdentifierX in Tabelle?
nein
MIT-Objekt ungültig
ja
Siegel
Select Fingerabdruck, Siegel FROM Tabelle WHERE Identifier=IdentifierX
Fingerabdruck
FingerabdruckX :=
Einwegfunktion(NutzernameX . GeldbetragX .AppendixX)
SiegelX := Einwegfunktion(AppendixX)
FingerabdruckX =
= Fingerabdruck?
nein
ja
SiegelX =
= Siegel?
nein
ja
MIT-Objekt gültig

FIG. 6.2

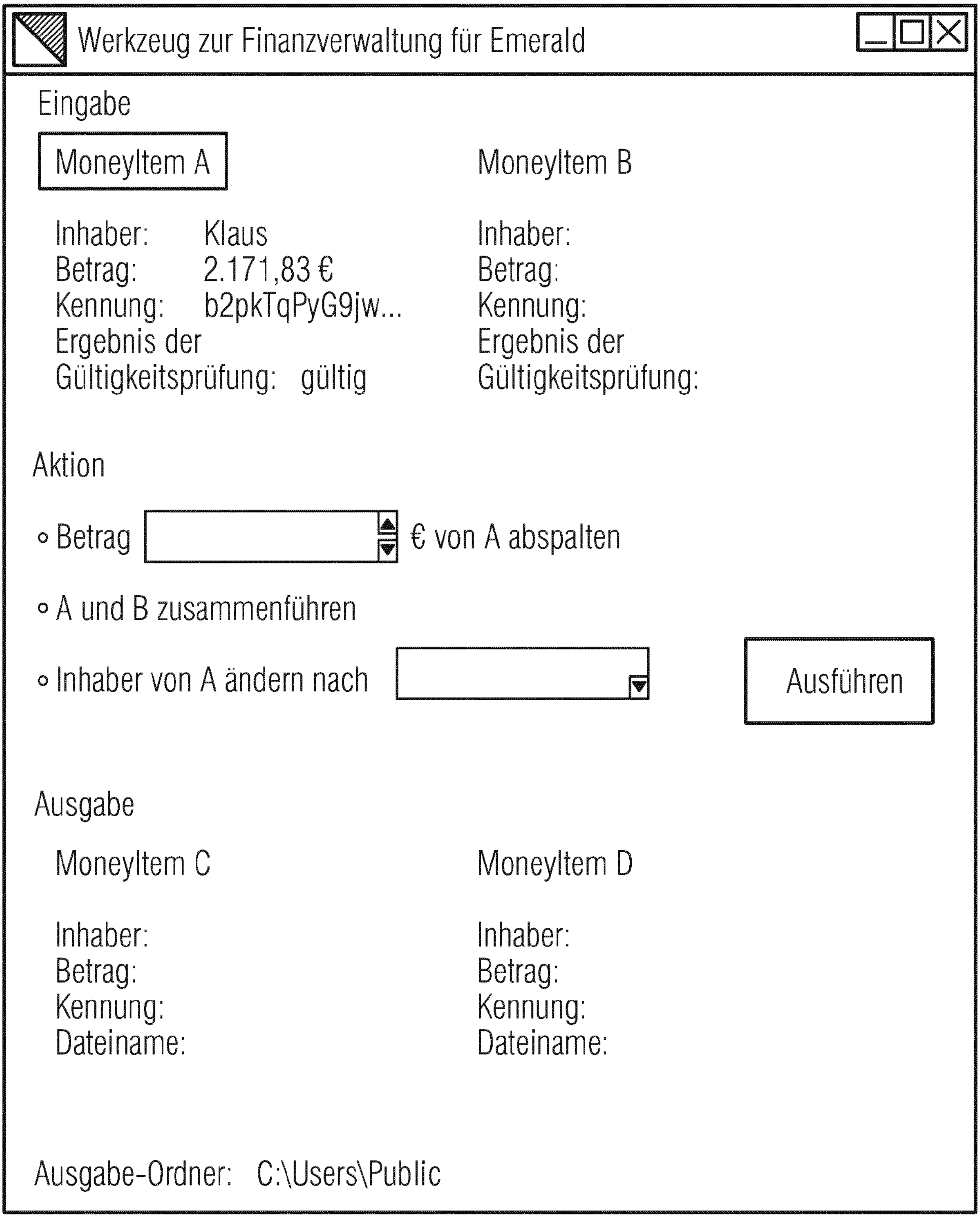
Werkzeug zur Finanzverwaltung für Emerald
Eingabe
MoneyItem A
MoneyItem B
Inhaber: Klaus
Betrag: 2.171,83 €
Kennung: b2pkTqPyG9jw...
Ergebnis der Gültigkeitsprüfung: gültig
Inhaber:
Betrag:
Kennung:
Ergebnis der Gültigkeitsprüfung:
Aktion
Betrag
€ von A abspalten
A und B zusammenführen
Inhaber von A ändern nach
Ausführen
Ausgabe
MoneyItem C
MoneyItem D
Inhaber:
Betrag:
Kennung:
Dateiname:
Inhaber:
Betrag:
Kennung:
Dateiname:
Ausgabe-Ordner: C:\Users\Public

FIG. 6.3

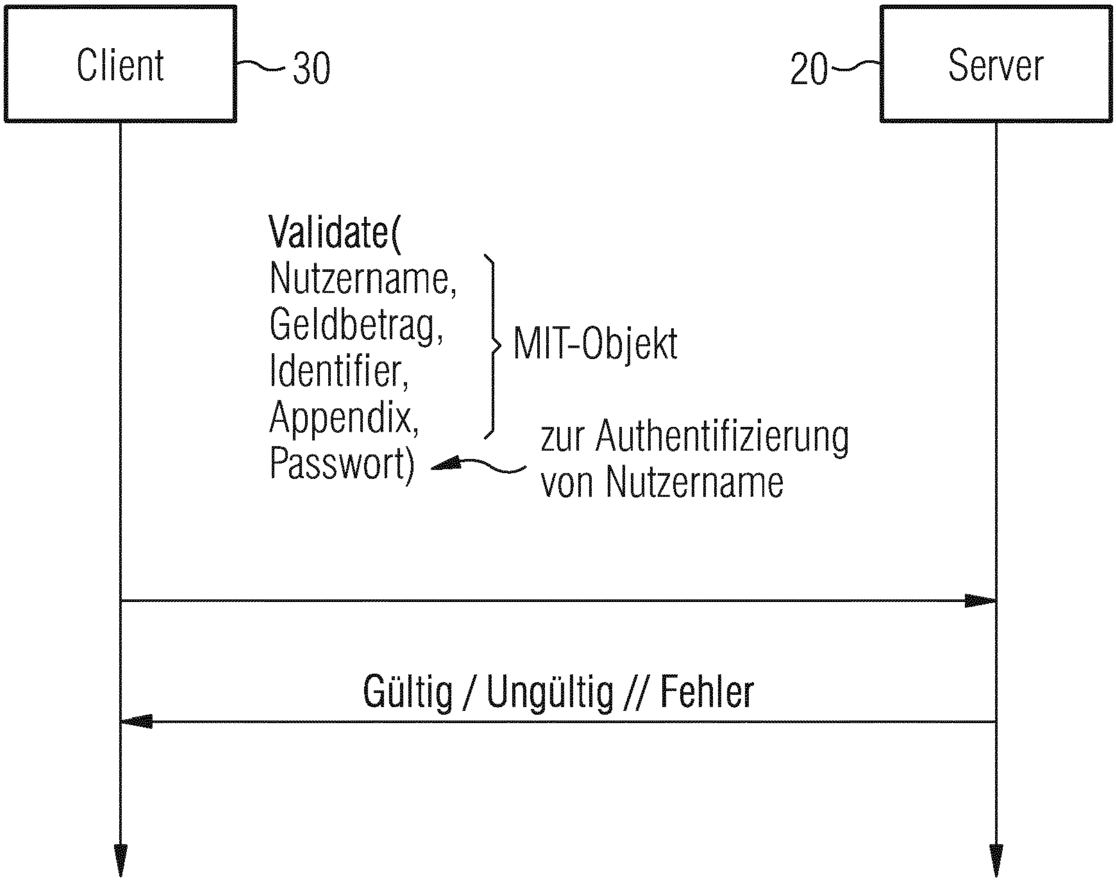
Client
30
20
Server
Validate(
Nutzername,
Geldbetrag,
Identifier,
Appendix,
Passwort)
MIT-Objekt
zur Authentifizierung
von Nutzername
Gültig / Ungültig // Fehler

FIG. 7

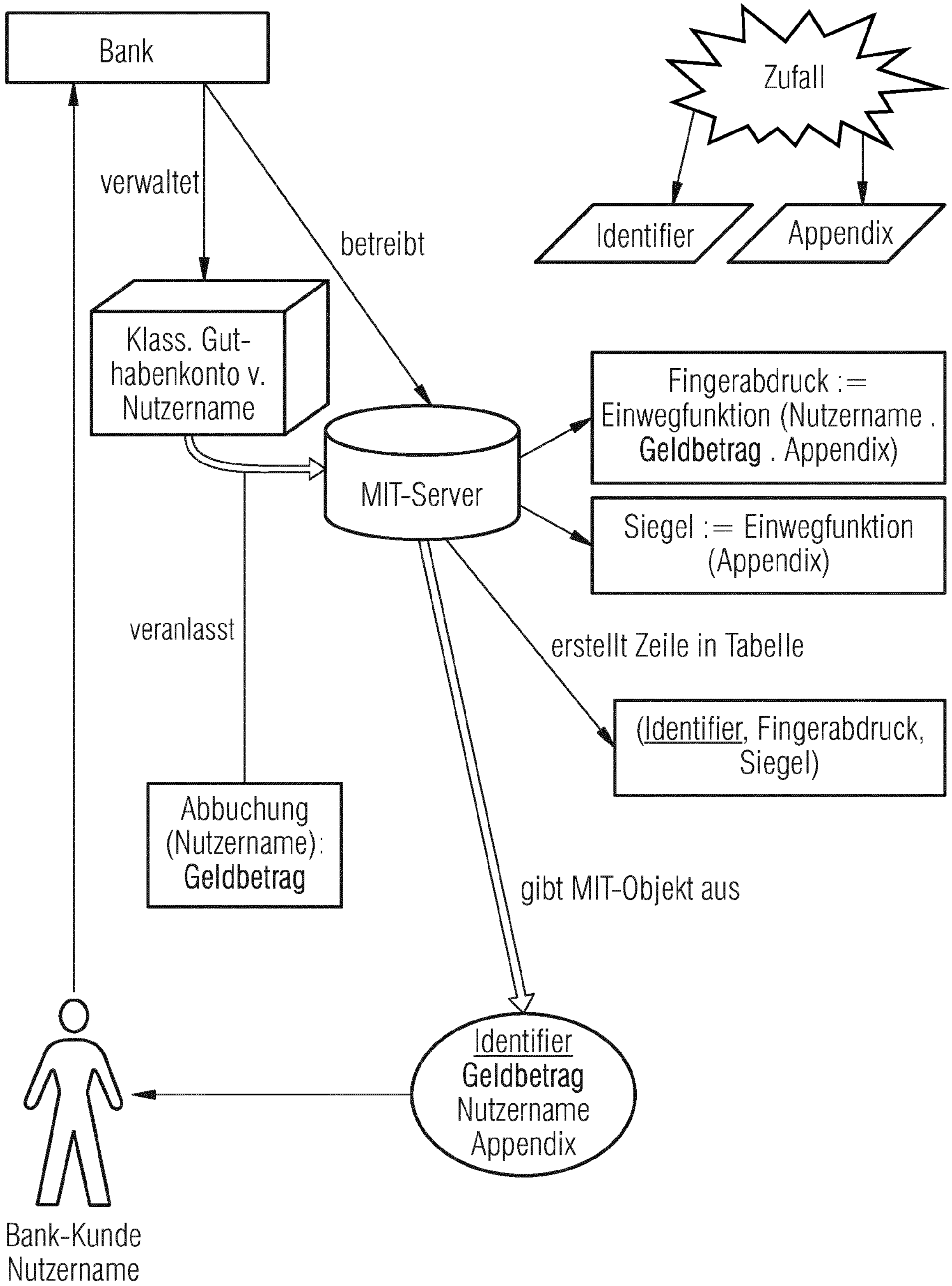
Bank
verwaltet
betreibt
Zufall
Identifier
Appendix
Klass. Gut-
habenkonto v.
Nutzername
MIT-Server
Fingerabdruck :=
Einwegfunktion (Nutzername .
Geldbetrag . Appendix)
Siegel := Einwegfunktion
(Appendix)
veranlasst
erstellt Zeile in Tabelle
(Identifier, Fingerabdruck,
Siegel)
Abbuchung
(Nutzername):
Geldbetrag
gibt MIT-Objekt aus
Identifier
Geldbetrag
Nutzername
Appendix
Bank-Kunde
Nutzername

FIG. 8 Teil 1

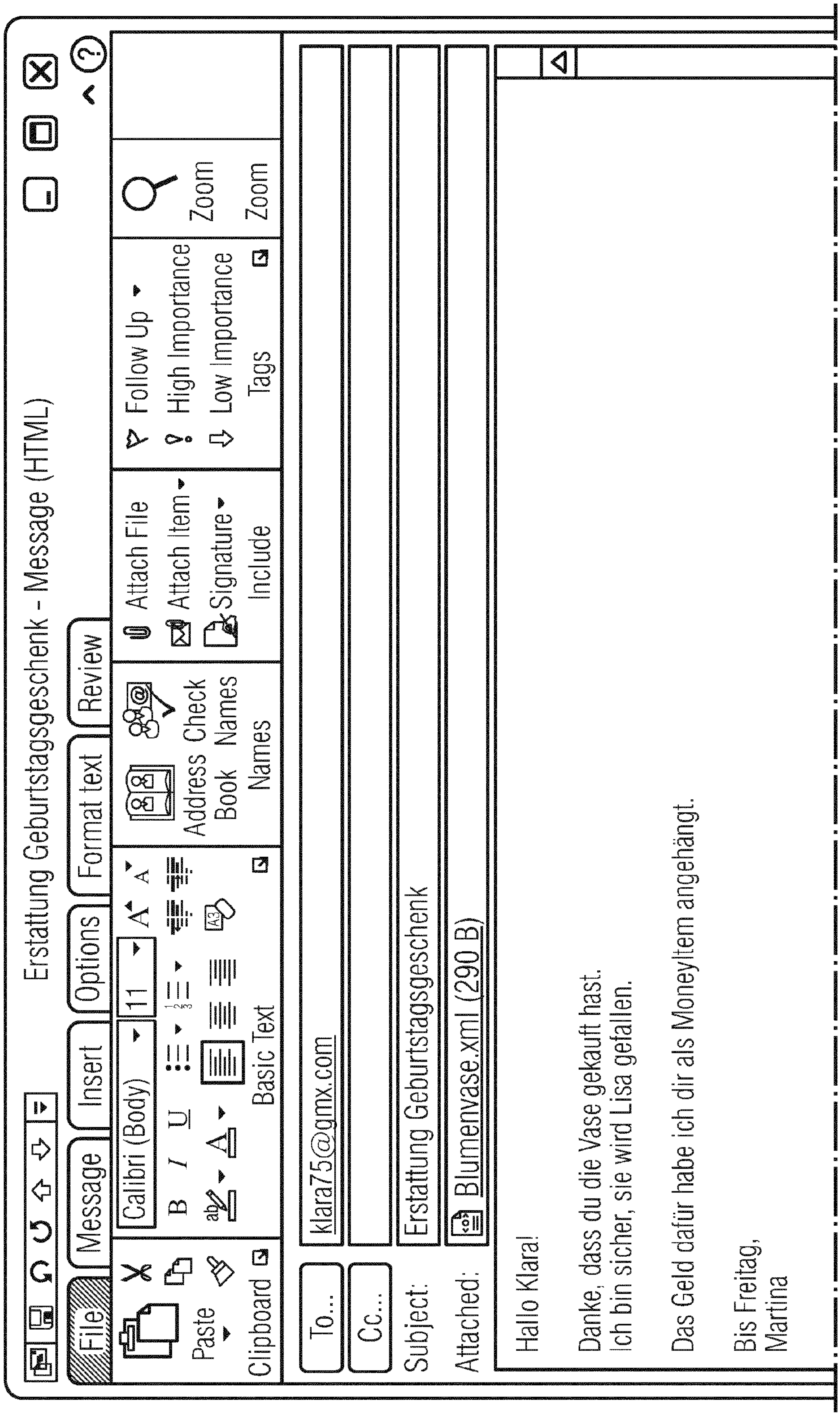

Erstattung Geburtstagsgeschenk - Message (HTML)
File
Message
Insert
Options
Format text
Review
Paste
Clipboard
Calibri (Body)
11
Basic Text
Address Book
Check Names
Names
Attach File
Attach Item
Signature
Include
Follow Up
High Importance
Low Importance
Tags
Zoom
Zoom
To...
Cc...
Subject:
Attached:
klara75@gmx.com
Erstattung Geburtstagsgeschenk
Blumenvase.xml (290 B)
Hallo Klara!
Danke, dass du die Vase gekauft hast.
Ich bin sicher, sie wird Lisa gefallen.
Das Geld dafür habe ich dir als MoneyItem angehängt.
Bis Freitag,
Martina

FIG. 8 Teil 2

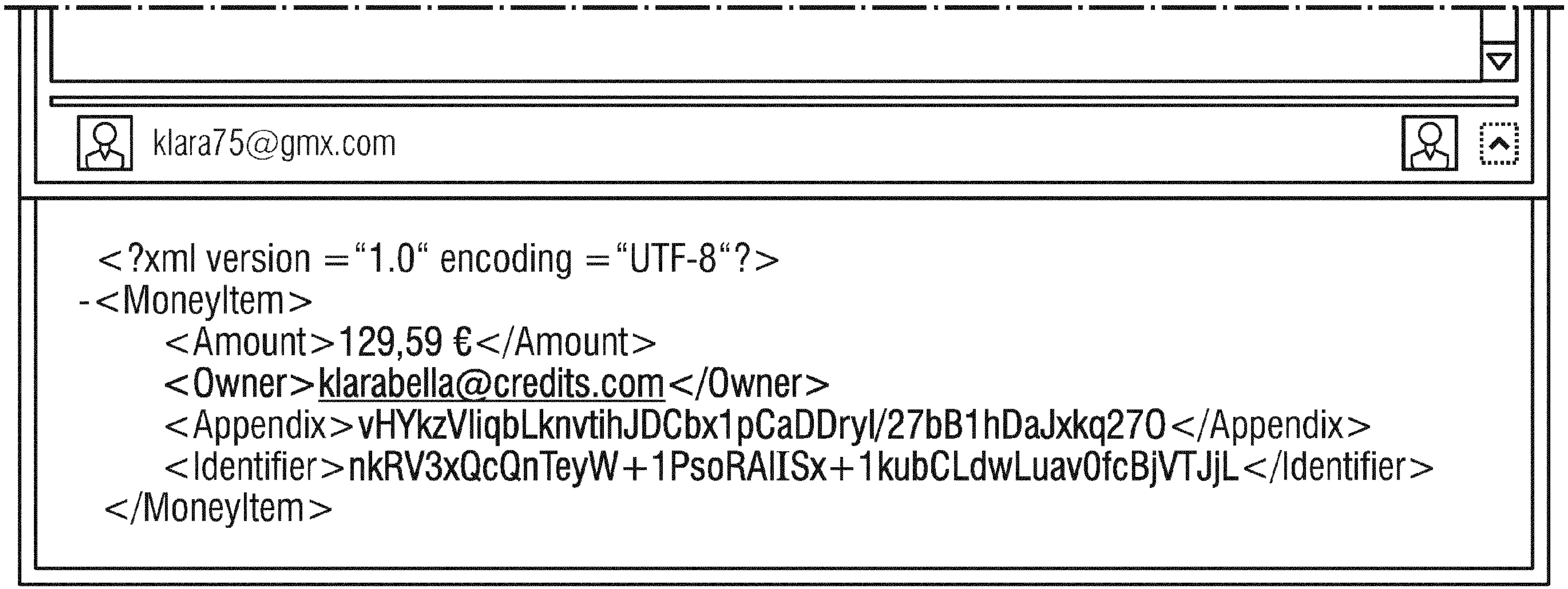
klara75@gmx.com
<?xml version =“1.0“ encoding =“UTF-8“?>
-<MoneyItem>
<Amount>129,59 €</Amount>
<Owner>klarabella@credits.com</Owner>
<Appendix>vHYkzVliqbLknvtihJDCbx1pCaDDryl/27bB1hDaJxkq27O</Appendix>
<Identifier>nkRV3xQcQnTeyW+1PsoRAlISx+1kubCLdwLuav0fcBjVTJjL</Identifier>
</MoneyItem>

Europäisches Patentamt
European Patent Office
Office européen des brevets

# EUROPÄISCHER RECHERCHENBERICHT

Nummer der Anmeldung
EP 17 16 4664

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 696 32 482 T2 (MICROSOFT CORP [US]) 12. Mai 2005 (2005-05-12)<br>* Zusammenfassung *<br>* Absatz [0008] *<br>* Absatz [0033] *<br>* Absatz [0035] - Absatz [0037] *<br>* Absatz [0039] - Absatz [0040] *<br>* Absatz [0044] - Absatz [0048] *<br>* Absatz [0050] *<br>* Absatz [0052] *<br>* Absatz [0054] - Absatz [0055] *<br>* Absatz [0074] *<br>* Abbildung 2 *<br>----- | 1-13 | INV.<br>G06Q20/36<br>G06Q20/06<br>G06Q20/38 |
| X | US 2015/026042 A1 (FRANCA-NETO LUIZ M [US]) 22. Januar 2015 (2015-01-22)<br>* Zusammenfassung *<br>* Absatz [0030] - Absatz [0042] *<br>* Absatz [0044] - Absatz [0049] *<br>* Absatz [0057] - Absatz [0059] *<br>* Abbildungen 1-4, 6 *<br>----- | 1-13 | |
| | | | RECHERCHIERTE SACHGEBIETE (IPC) |
| X | WO 2005/109359 A1 (WEB DE AG [DE]; COTTE PIERRE-ALAIN [DE]; GREVE MICHAEL [DE]) 17. November 2005 (2005-11-17)<br>* Zusammenfassung *<br>* Seite 1, Zeile 9 - Seite 2, Zeile 19 *<br>* Abbildung 1 *<br>----- | 1-13 | G06Q |
| X | WO 01/67407 A1 (TECHNOCASH INC [US]; PAKALNS RAYMOND ERIC [AU]; MONSTED PAUL [AU]) 13. September 2001 (2001-09-13)<br>* Zusammenfassung *<br>* Seite 17, Zeile 14 - Seite 18, Zeile 18 *<br>* Abbildungen 4, 7 *<br>----- | 1-13 | |

Der vorliegende Recherchenbericht wurde für alle Patentansprüche erstellt

2

| Recherchenort | Abschlußdatum der Recherche | Prüfer |
|---|---|---|
| Den Haag | 2. August 2017 | Stark, Konrad |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 17 16 4664

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-08-2017

| Im Recherchenbericht angeführtes Patentdokument | Datum der Veröffentlichung | Mitglied(er) der Patentfamilie | Datum der Veröffentlichung |
|---|---|---|---|
| DE 69632482 T2 | 12-05-2005 | AT 266919 T | 15-05-2004 |
| | | CA 2229206 A1 | 13-03-1997 |
| | | DE 69632482 D1 | 17-06-2004 |
| | | DE 69632482 T2 | 12-05-2005 |
| | | EP 0873615 A2 | 28-10-1998 |
| | | JP 2000503786 A | 28-03-2000 |
| | | US 5768385 A | 16-06-1998 |
| | | WO 9709688 A2 | 13-03-1997 |
| US 2015026042 A1 | 22-01-2015 | KEINE | |
| WO 2005109359 A1 | 17-11-2005 | KEINE | |
| WO 0167407 A1 | 13-09-2001 | KEINE | |

EPO FORM P0461

Für nähere Einzelheiten zu diesem Anhang : siehe Amtsblatt des Europäischen Patentamts, Nr.12/82